(19) Europäisches Patentamt
European Patent Office
Office européen des brevets

(11) **EP 4 492 184 B1**

(12) **EUROPÄISCHE PATENTSCHRIFT**

(45) Veröffentlichungstag und Bekanntmachung des Hinweises auf die Patenterteilung:
**11.03.2026 Patentblatt 2026/11**

(21) Anmeldenummer: **24187208.4**

(22) Anmeldetag: **08.07.2024**

(51) Internationale Patentklassifikation (IPC):
**G05D 1/648** *(2024.01)*    **A01B 69/04** *(2006.01)*
**G05D 1/644** *(2024.01)*

(52) Gemeinsame Patentklassifikation (CPC):
**G05D 1/6484; A01B 69/008; G05D 1/644;**
G01C 21/20; G05D 2105/15; G05D 2107/21;
G05D 2109/10

(54) **VERFAHREN ZUR FAHRROUTENPLANUNG**

METHOD FOR PLANNING DRIVING ROUTES

PROCÉDÉ DE PLANIFICATION D'ITINÉRAIRE DE DÉPLACEMENT

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **14.07.2023 DE 102023118713**

(43) Veröffentlichungstag der Anmeldung:
**15.01.2025 Patentblatt 2025/03**

(73) Patentinhaber:
• **KRONE Agriculture SE**
**48480 Spelle (DE)**
• **Lemken GmbH & Co KG**
**46519 Alpen (DE)**

(72) Erfinder:
• **Grever, Alexander**
**49078 Osnabrück (DE)**

• **Lömker, Jens**
**48496 Hopsten (DE)**
• **Mählmann-Dunker, Hannes**
**27251 Neuenkirchen (DE)**
• **Müter, Matthias**
**53179 Bonn (DE)**

(74) Vertreter: **Engelmann, Kristiana et al**
**Busse & Busse, Patentanwälte**
**Grosshandelsring 6**
**49084 Osnabrück (DE)**

(56) Entgegenhaltungen:
EP-A1- 3 414 982          CN-A- 114 518 746
DE-A1- 102008 020 616     DE-A1- 102023 118 716
DE-A1- 102023 125 513     US-A1- 2021 302 962
US-A1- 2025 020 468       US-A1- 2025 089 609

**Beschreibung**

Die vorliegende Erfindung betrifft ein Verfahren zur Fahrroutenplanung nach dem Oberbegriff von Anspruch 1, ein Computersystem zur Fahrroutenplanung nach dem Oberbegriff von Anspruch 15, eine Erntemaschine nach dem Oberbegriff von Anspruch 16 sowie ein Computerprogrammprodukt nach Anspruch 17.

Bei der Bearbeitung einer landwirtschaftlichen Nutzfläche, zum Beispiel eines gegebenen Bearbeitungsbereichs, fährt eine Erntemaschine die gesamte Fläche in mehreren Fahrspuren nach und nach ab. In einem Innenbereich können zum Beispiel parallele Fahrspuren genutzt werden. Zum Wechsel zwischen den parallelen Fahrspuren sind Wendewege notwendig, die in einem Vorgewende durchfahren werden, welches randseitig des Innenbereichs angeordnet ist. Im Fall einer Erntemaschine, zum Beispiel eines Mähdreschers oder Feldhäckslers, wird üblicherweise zunächst das Vorgewende bearbeitet, also abgeerntet, und danach der Innenbereich. Somit wird ein unnötiges Überfahren von unbearbeitetem Bestand im Vorgewende vermieden. Ein derartiges Vorgehen ist zwar effizient, unter dem Aspekt des Wildschutzes allerdings problematisch. Durch das Abernten des Vorgewendes wird ein Randbereich geschaffen, der keine Deckung bietet und daher von evtl. im Innenbereich befindlichem Wild nur ungern durchquert wird. Tatsächlich kann es schlimmstenfalls dazu kommen, dass Wild vom Vorgewende fort zum Zentrum des Innenbereichs flieht und somit bei der nachfolgenden Bearbeitung des Innenbereichs zu Schaden kommt.

Die US 2021/302962 A1 zeigt eine Bearbeitung des ganzen Randes einer Arbeitsfläche zu Beginn. Die CN 114 518 746 A zeigt das Verjagen eines Tieres mit einer landwirtschaftlichen Arbeitsmaschine. Die DE 10 2008 020616 A1 zeigt das Warnen des Wildes. Die EP 3 414 982 A1 zeigt das Erfassen des Wildes mittels einer Sensorik.

Demgegenüber gibt es Fahrstrategien, die dem Wild mit hoher Wahrscheinlichkeit eine Flucht ermöglichen, zum Beispiel ein Abernten von der Mitte des Feldes aus, wobei man sich spiralartig nach außen vorarbeitet. Derartige Strategien sind zwar unter dem Aspekt des Wildschutzes vorteilhaft, aber hochgradig ineffizient. Auch stellen sie eine hohe Anforderung an Konzentration und Geschicklichkeit des Fahrers der Erntemaschine, da sie untereinander zum Teil nicht-parallele Geradeausfahrten und eine Vielzahl von zwischenzeitlichen Richtungswechseln erfordern. Es besteht somit beim Erntevorgang ein Konflikt zwischen Effizienz und Wildschutz.

Aufgabe der Erfindung ist es, eine effiziente und gleichzeitig wildgerechte Erntestrategie vorzuschlagen.

Die Aufgabe wird gelöst mit einem Verfahren mit den Merkmalen des unabhängigen Patentanspruchs 1. Vorteilhafte Ausführungsformen sind den abhängigen Ansprüchen entnehmbar.

Dafür wird ein Verfahren geschaffen zur Fahrroutenplanung für einen Erntevorgang, bei welchem ein vorgegebener Bearbeitungsbereich von einer Erntemaschine entsprechend einer Fahrroute durchfahren wird, wobei

- für eine Fahrroute ein Fluchtrand definiert wird, mit wenigstens einer Fluchtkante des Bearbeitungsbereichs, welche einem Zufluchtbereich für Wild außerhalb des Bearbeitungsbereichs zugewandt ist,
- ein Innenbereich des Bearbeitungsbereichs definiert wird sowie ein Vorgewende, welches außenseitig des Innenbereichs unter Aussparung des Fluchtrands angeordnet ist,
- die Fahrroute automatisch derart ermittelt wird, dass wenigstens in einem Teilbereich des Bearbeitungsbereichs eine Wildschutzbearbeitung erfolgt, indem zunächst das Vorgewende bearbeitet wird und danach der Innenbereich unter Nutzung des Vorgewendes für Wendevorgänge, wobei die Bearbeitung des Innenbereichs in einem von einer Fluchtkante beabstandeten Anfangsbereich begonnen und sukzessive zu dieser Fluchtkante hin fortgesetzt wird, wodurch ein bearbeiteter Bereich sukzessive vom Anfangsbereich zur Fluchtkante hin ausgedehnt wird, und
- automatisch Steuerdaten zur Steuerung der Erntemaschine während des Erntevorgangs erzeugt werden, wobei die Steuerdaten eine ermittelte Fahrroute repräsentieren.

Das Verfahren ist zur Fahrroutenplanung bei einem Erntevorgang vorgesehen. Der Erntevorgang wird durch eine Erntemaschine ausgeführt. Die Erntemaschine kann auch als Landmaschine oder landwirtschaftliche Arbeitsmaschine bezeichnet werden, wobei sie zur Ernte ausgebildet ist. Das heißt sie ist dazu ausgebildet, einen Bestand abzuernten. Pflanzen des Bestands werden dabei abgeschnitten oder anderweitig abgetrennt. Optional kann die Erntemaschine die Pflanzen auch weiterverarbeiten, zum Beispiel zerkleinern, nutzbare und nicht-nutzbare Anteile der Pflanze voneinander trennen oder dergleichen. Der Begriff "Ernte" ist nicht dahingehend auszulegen, dass die Erntemaschine die geschnittenen Pflanzen auch aufnehmen oder transportieren muss. Es ist auch möglich, dass die geschnittenen Pflanzen oder Pflanzenteile zunächst auf dem Boden liegen bleiben und durch eine weitere Landmaschine aufgenommen werden, unter Umständen deutlich später. Die Erntemaschine kann beispielsweise ein Mähdrescher oder Feldhäcksler sein, oder auch ein Schlepper mit Anbaumähwerk. Der Begriff "Erntemaschine" schließt in diesem Zusammenhang ausdrücklich auch Gespanne ein, mit einem Schlepper und wenigstens einer hiervon gezogenen Maschine bzw. einem Anhänger.

Im Rahmen des Erntevorgangs durchfährt die Erntemaschine entsprechend einer Fahrroute einen Bearbeitungsbereich, zum Beispiel einen Acker, ein Feld bzw. einen Teil desselben, wobei zur Vereinfachung die Begriffe "Feld" und "Acker" gleichbedeutend verwendet werden. In diesem Bearbeitungsbereich erfolgt der Erntevorgang, was nicht zwangsläufig bedeutet, dass der gesamte Bearbeitungsbereich bearbeitet wird, wenngleich dies wünschenswert ist.

Das Verfahren weist die nachfolgend genannten Schritte auf, wobei diese ausdrücklich nicht zwangsläufig in der genannten Reihenfolge ausgeführt werden müssen. Die zeitliche Abfolge zweier Schritte kann gegenüber der Reihenfolge ihrer Nennung umgekehrt sein. Ebenso ist es möglich, dass zwei Schritte ganz oder teilweise zeitlich parallel ausgeführt werden.

Gemäß einem Verfahrensschritt wird für eine Fahrroute ein Fluchtrand definiert, mit wenigstens einer Fluchtkante des Bearbeitungsbereichs, welche einem Zufluchtbereich für Wild außerhalb des Bearbeitungsbereichs zugewandt ist. Der Fluchtrand kann eine oder mehrere Fluchtkanten umfassen. Die jeweilige Fluchtkante ist eine Kante, die den Bearbeitungsbereich begrenzt. Sie kann zum Beispiel einer Seite des Bearbeitungsbereichs entsprechen, oder einem Teilbereich einer Seite. Sie ist einem Zufluchtbereich für Wild zugewandt. Der Zufluchtbereich ist ein Bereich, in welchem Wild, zum Beispiel Rehe, Hasen, Füchse, Dachse, Igel etc., Schutz suchen kann. Man kann auch von einem Deckungsbereich sprechen. Es kann sich hierbei insbesondere um ein Waldstück handeln, es kommen aber auch andere Gebiete infrage. So könnte auch eine landwirtschaftlich genutzte Fläche, die in nächster Zeit nicht bearbeitet wird, als Zufluchtbereich dienen. Im Bearbeitungsbereich befindliches Wild kann in den Zufluchtbereich fliehen und ist dort zumindest bis auf Weiteres sicher. Die Fluchtkante ist dem Zufluchtbereich zugewandt und kann insbesondere an ihn angrenzen. Die Definition des Fluchtrands ist im Zusammenhang mit der Fahrtroute und deren Planung zu sehen. Der Fluchtrand kann benutzerseitig definiert werden oder insbesondere automatisch.

In einem weiteren Verfahrensschritt werden ein Innenbereich des Bearbeitungsbereichs definiert sowie ein Vorgewende, welches außenseitig des Innenbereichs unter Aussparung des Fluchtrands angeordnet ist. Sowohl der Innenbereich als auch das Vorgewende sind Teil des Bearbeitungsbereichs und müssen somit beim Erntevorgang von der Erntemaschine bearbeitet werden. Der Innenbereich macht bevorzugt den überwiegenden Teil der Fläche des Bearbeitungsbereichs aus. Wenngleich die Erfindung nicht hierauf beschränkt ist, ist bevorzugt vorgesehen, dass der Innenbereich entsprechend einer Mehrzahl paralleler Fahrspuren durchfahren wird, die bevorzugt gerade ausgebildet sind und sich durch eine Ausrichtung oder Bearbeitungsrichtung charakterisieren lassen. Für den Wechsel zwischen zwei Fahrspuren werden Wendewege im Vorgewende genutzt, welches randseitig des Innenbereichs angeordnet ist. Im vorliegenden Fall spart das Vorgewende den definierten Fluchtrand aus, das heißt es ist nur in solchen Randbereichen angeordnet, auf die sich der Fluchtrand nicht erstreckt. Man kann auch sagen, es erstreckt sich nur auf diejenigen Ränder des Bearbeitungsbereichs, die keine Fluchtkanten des definierten Fluchtrands sind. Dabei ist es möglich, dass eine Seite des Bearbeitungsbereichs teilweise eine Fluchtkante bildet und somit zum Fluchtrand gehört, während sie teilweise zum Vorgewende gehört. So kann zum Beispiel der mittlere Teil einer Seite des Bearbeitungsbereichs eine Fluchtkante sein, während die äußeren Enden dieser Seite zum Vorgewende gehören. Der Innenbereich und das Vorgewende könnten benutzerseitig definiert werden, bevorzugt werden sie allerdings automatisch definiert.

In einem weiteren Schritt, der bevorzugt nach den o.g. Schritten ausgeführt wird, wird die Fahrroute automatisch derart ermittelt, dass wenigstens in einem Teilbereich des Bearbeitungsbereichs eine Wildschutzbearbeitung erfolgt, indem zunächst das Vorgewende bearbeitet wird und danach der Innenbereich unter Nutzung des Vorgewendes für Wendevorgänge, wobei die Bearbeitung des Innenbereichs in einem von einer Fluchtkante beabstandeten Anfangsbereich begonnen und sukzessive zu dieser Fluchtkante hin fortgesetzt wird, wodurch ein bearbeiteter Bereich sukzessive vom Anfangsbereich zur Fluchtkante hin ausgedehnt wird. Die Fahrroute wird automatisch ermittelt, also zum Beispiel durch ein Computersystem, ohne dass menschliche Gedankentätigkeit hierzu notwendig ist. Die Fahrroute verwirklicht wenigstens in einem Teilbereich des Bearbeitungsbereichs, vorteilhaft im gesamten Bearbeitungsbereich, eine Wildschutzbearbeitung. Der Begriff "Wildschutzbearbeitung" bezeichnet hier eine Bearbeitungsstrategie, die wie folgt strukturiert ist. Zunächst wird das Vorgewende bearbeitet. Dies bedeutet, dass das Vorgewende ganz oder wenigstens überwiegend (zum Beispiel zu wenigstens 90% oder wenigstens 95% seiner Fläche) abgeerntet wird. Dabei wird der Fluchtrand ausgespart, so dass der Bestand dort gewissermaßen weiterhin eine "Brücke" zum Zufluchtbereich bildet.

Danach wird der Innenbereich bearbeitet, was wiederum bedeutet, dass dieser ganz oder wenigstens überwiegend (zum Beispiel zu wenigstens 90% oder wenigstens 95% seiner Fläche) abgeerntet wird. Die Bearbeitung erfolgt allerdings nicht in beliebiger Weise, sondern wird in einem Anfangsbereich begonnen, der von der Fluchtkante beabstandet ist. Dementsprechend bleibt zwischen dem Anfangsbereich und der Fluchtkante zunächst eine unbearbeitete Fläche stehen, die dem Wild Deckung bietet. Insbesondere kann der Anfangsbereich der Fluchtkante bezüglich des Innenbereichs und/oder bezüglich des Teilbereichs gegenüberliegen. In diesem Fall liegt zunächst fast der gesamte Innenbereich oder Teilbereich als unbearbeitete Fläche vor, die an die Fluchtkante angrenzt. Die Bearbeitung wird dann sukzessive, also nach und nach, in Richtung der Fluchtkante fortgesetzt. Wie nachfolgend noch deutlicher wird, fährt die Erntemaschine dabei bevorzugt nicht unmittelbar auf die Fluchtkante zu, sondern sie bewegt sich auf Fahrspuren, die vorteilhaft parallel zur Fluchtkante oder zumindest in einem begrenzten Winkel zu dieser verlaufen (zum Beispiel maximal 45° oder maximal 30°). Unter Nutzung des Vorgewendes kann die Erntemaschine nach und nach in Fahrspuren wechseln, die näher an der Fluchtkante liegen. Demensprechend wird der bearbeitete Bereich nach und nach zur Fluchtkante hin ausgedehnt. Im Sinne einer möglichst vollständigen Bearbeitung dehnt sich der bearbeitete Bereich schließlich bis zur Fluchtkante hin aus. Es ist dabei möglich, dass der bearbeitete Bereich zusammenhängend ist, zum Beispiel indem die Erntemaschine sich von einer Fahrspur zur nächsten vorarbeitet. Er kann aber auch zumindest zeitweise nicht zusammenhängend sein. So kann die Erntemaschine zum Beispiel aus einer "ersten" Fahrspur in eine "vierte" Fahrspur wechseln, also zwei Fahrspuren überspringen, von dort aus in die "zweite" Fahrspur wechseln, also sich zwei Fahrspuren zurückbewegen, von dort in die "fünfte" Fahrspur etc. Auch in diesem Fall dehnt sich der bearbeitete Bereich nach und nach weiter in Richtung der Fluchtkante aus, wenngleich zwischenzeitlich immer Teile des Innenbereichs übersprungen werden. Die allgemeine Richtung, in welcher sich der bearbeitete Bereich ausdehnt, kann dabei wenigstens annähernd einer Fluchtrichtung des Wildes entsprechen, die das Wild (voraussichtlich) bei seinem Weg zum Zufluchtsbereich einschlägt. In jedem Fall nähert sich der bearbeitete Bereich vergleichsweise langsam oder allmählich der Fluchtkante an, so dass eine hohe Wahrscheinlichkeit besteht, dass Wild durch die Annäherung der Erntemaschine aufgeschreckt wird und vom bearbeiteten Bereich fort in Richtung der Fluchtkante getrieben wird. Da dort kein abgeerntetes Vorgewende zwischengelagert ist, wird dem Wild die Flucht erleichtert.

In einem weiteren Verfahrensschritt werden automatisch Steuerdaten zur Steuerung der Erntemaschine während des Erntevorgangs erzeugt, welche Steuerdaten die Fahrroute repräsentieren. Die Steuerdaten enthalten in jedem Fall die Informationen, die zum Steuern der Erntemaschine entlang der Fahrroute notwendig sind. Beim Erntevorgang kann die Erntemaschine entsprechend der Steuerdaten gesteuert werden. Der Begriff "steuern" bezieht sich hier allgemein auf jede gezielte Beeinflussung von Ausrichtung und/oder Bewegungszustand der Erntemaschine, also zum Beispiel Lenken, Beschleunigen, Abbremsen etc. Optional können sich die Steuerdaten auch teilweise auf andere Funktionen der Landmaschine beziehen, zum Beispiel eine Steuerung eines Hubwerks. Jedenfalls kann die Erntemaschine anhand der Steuerdaten so gesteuert werden, dass sie idealerweise der ermittelten Fahrroute folgt. Das Format der Steuerdaten sowie deren Inhalt können unterschiedlich gewählt werden, insbesondere in Abhängigkeit von der jeweiligen Erntemaschine sowie gegebenenfalls weiteren zur Umsetzung des Verfahrens eingesetzten Komponenten. Insbesondere kann die Fahrroute durch eine mehr oder weniger dichte Folge von Wegpunkten repräsentiert sein. Es können auch explizite Lenkanweisungen in den Steuerdaten enthalten sein, oder lediglich Positionsangaben für Wegpunkte, wobei auf Seiten der Erntemaschine die passenden Lenkparameter ermittelt werden, um von einem Wegpunkt zum nächsten zu gelangen.

Die Erfindung ermöglicht eine effiziente Ernte, da eine zunächst erfolgende Bearbeitung des Vorgewendes und eine anschließende Bearbeitung des Innenbereichs einem grundsätzlich bekannten und bewährten Prinzip entspricht. Die entsprechenden Fahrmanöver lassen sich zum Beispiel auch manuell durchführen, das heißt der Fahrer wird nicht in ungewöhnlicher Weise beansprucht. Außerdem wird er durch die erzeugten Steuerdaten zumindest unterstützt, sofern ihm die Steuerung nicht ganz oder teilweise abgenommen wird. Andererseits ist die Bearbeitung wildschonend, da dem Wild während des gesamten Erntevorgangs über den Fluchtrand stets eine Fluchtmöglichkeit in Richtung eines Zufluchtbereichs möglich ist. Schließlich wird die Routenplanung automatisch durchgeführt, was einem Benutzer, zum Beispiel einem Fahrer, komplexe Überlegungen erspart.

Es ist möglich, dass für einen Bearbeitungsbereich nach einem festgelegten Schema genau eine Fahrroute bestimmt wird, für die dann Steuerdaten erzeugt werden. Aufgrund der Vielzahl unterschiedlicher Bearbeitungsbereiche, unterschiedlicher Umgebungen, aus denen sich Zufluchtbereiche ableiten lassen, sowie möglicher anderer Variablen, wird eine derart bestimmte Fahrroute nicht (oder allenfalls zufällig) die bestmögliche Fahrroute darstellen, unabhängig davon, woran die "Güte" der Fahrroute beurteilt wird. Um diesbezüglich eine Verbesserung zu erreichen, ist es stark bevorzugt, dass eine automatische Optimierung der Fahrroute durchgeführt wird, indem aus einer Mehrzahl möglicher Fahrrouten eine entsprechend einem Optimierungskriterium optimale Fahrroute ermittelt wird, und automatisch Steuerdaten erzeugt werden, die die optimale Fahrroute repräsentieren. Das heißt, es wird eine Mehrzahl von möglichen Fahrrouten betrachtet, die gewissermaßen Kandidaten für eine optimale Fahrroute darstellen, und es wird anhand eines Optimierungskriteriums zur Fahrroutenoptimierung untersucht, welche dieser Fahrrouten optimal ist. Der Begriff "optimale Fahrroute" ist so zu verstehen, dass dies die beste Fahrroute ist, die entsprechend dem Optimierungskriterium aufgefunden wurde. Unter Umständen könnte tatsächlich eine bessere Fahrroute existieren, die allerdings nicht aufgefunden wurde, beispielsweise, weil nicht genügend unterschiedliche Fahrrouten untersucht wurden. Die Optimierung erfolgt automatisch, also maschinell bzw. computergestützt. Soweit hier und im Folgenden der Begriff "automatisch" verwendet wird, schließt dies insbesondere die Möglichkeit ein, dass die entsprechenden Vorgänge ganz oder teilweise durch Software durchgeführt werden, die auf einer geeigneten Hardware implementiert ist. Dieser Schritt sowie weitere Schritte des Verfahrens können zum Beispiel durch ein Farm-Management-Informationssystem (FMIS) durchgeführt werden. Es versteht sich, dass sämtliche betrachteten Fahrrouten einer oben beschriebenen Wildschutzbearbeitung entsprechen müssen. Eine Fahrroute, bei der die Bearbeitung des Innenbereichs zum Beispiel an der Fluchtkante beginnt und somit dem Wild den Fluchtweg abschneiden würde, wird von vornherein ausgeschlossen.

Bevorzugt basiert das Optimierungskriterium wenigstens teilweise auf einer Optimierung eines Optimierungswerts, der durch Aufsummieren von Beiträgen einzelner Routenabschnitte einer Fahrroute ermittelt wird. Der Optimierungswert kann in vielen Fällen auch als Aufwandswert oder Kostenwert bezeichnet werden, wobei die Optimierung des Optimierungswerts dann in einer Minimierung liegt. Es wäre allerdings auch denkbar, dass, je nach Art bzw. Definition des Optimierungswerts, die Optimierung in einer Maximierung desselben liegt. Im einfachsten Fall besteht das Optimierungskriterium in einer Minimierung (bzw. Maximierung) des Optimierungswerts. Das heißt diejenige Fahrroute ist optimal, die den Optimierungswert optimiert. Wie nachfolgend noch erläutert wird, könnten aber auch andere Größen, zum Beispiel weitere Optimierungswerte, berücksichtigt werden, so dass die Optimierung des einen Optimierungswerts mit anderen Zielsetzungen konkurriert. In jedem Fall wird der Optimierungswert ermittelt, indem Beiträge einzelner Routenabschnitte einer Fahrroute aufsummiert werden. Der Optimierungswert W lässt sich wie folgt berechnen:

$$ W = \sum_j W_j $$

wobei $W_j$ den Beitrag des j-ten Routenabschnitts darstellt und die Summe über j über alle Routenabschnitte läuft.

Bei der Planung möglicher Fahrrouten ist eine Vielzahl von Vorgehensweisen denkbar. Eine Fahrroute kann - sowohl im Vorgewende als auch im Innenbereich - durch eine Mehrzahl von Variationsparametern charakterisiert werden. Es ist sinnvoll, die Anzahl der Variationsparameter zu begrenzen, um den Rechenaufwand in einem akzeptablen Rahmen zu halten. Hierbei spielt selbstverständlich die zur Verfügung stehende Rechenkapazität eine Rolle. Eine Begrenzung der Variationsparameter bedeutet auch, dass von vornherein bestimmte Annahmen darüber gemacht werden, welche grundsätzlichen Eigenschaften eine optimale Fahrroute hat. Eine vorteilhafte Annahme besteht darin, dass die Fahrroute im Innenbereich eine Mehrzahl von parallelen Fahrspuren aufweist. Eine Fahrspur, welche auch als Bearbeitungsspur bezeichnet werden könnte, entspricht in diesem Zusammenhang einem Teil der Fahrroute der Erntemaschine im Innenbereich, so dass die gesamte oder zumindest überwiegende Fläche des Innenbereichs nach und nach durch Abfahren einzelner Fahrspuren bearbeitet wird. Die Fahrspuren verlaufen parallel, das heißt der Abstand zweier benachbarter Fahrspuren ist auf ihrer ganzen Länge konstant. Zur Fahrroute gehören neben den Fahrspuren innerhalb des Bearbeitungsbereichs allerdings auch Wendewege innerhalb des Vorgewendes, wenn die Erntemaschine von einer Fahrspur in eine andere wechselt.

Sofern man a priori festlegt, dass sämtliche Fahrspuren im Innenbereich parallel sind, lassen sich diese in ihrer Gesamtheit durch drei Parameter charakterisieren: die Ausrichtung, die Positionierung und die Reihenfolge. Im Falle gerader Fahrspuren entspricht die Ausrichtung einem Horizontalwinkel bzw. Azimutalwinkel, man könnte auch sagen, einer Himmelsrichtung, in welcher sämtliche Fahrspuren verlaufen. Die Ausrichtung legt allerdings nicht die Positionen der einzelnen Fahrspuren fest. Dies geschieht durch die Positionierung. Eine Möglichkeit ist, dass die Positionierung für jede Fahrspur zweidimensionale Koordinaten eines Punktes enthält, durch den die jeweilige Fahrspur führt. Zusammen mit der Ausrichtung ist somit die Anordnung der Fahrspur vollständig festgelegt. In aller Regel ist allerdings der Abstand bzw. seitliche Versatz zueinander benachbarter Fahrspuren für alle Fahrspuren identisch und entspricht einer Spurbreite. Die Spurbreite kann der effektiven Bearbeitungsbreite der Erntemaschine entsprechen, also der Breite, die quer zur Fahrtrichtung effektiv bearbeitet werden kann. Es wären allerdings auch Abweichungen denkbar. So könnte die Spurbreite - innerhalb gewisser Grenzen - ebenfalls variiert werden und somit einen weiteren Variationsparameter darstellen. Ansonsten lassen sich die Positionen sämtlicher Fahrspuren unter Kenntnis der Spurbreite durch einen einzigen Punkt einer Fahrspur festlegen, durch dessen zweidimensionalen Koordinaten die Positionierung ausgedrückt werden kann. Schließlich lässt sich die Fahrroute durch die Reihenfolge charakterisieren, in der die (durch Ausrichtung und Positionierung räumlich festgelegten) Fahrspuren durchfahren werden. Hierdurch können verschiedene Fahrstrategien dargestellt werden, beispielsweise, dass die Erntemaschine von einer Fahrspur in die jeweils räumlich nächste Fahrspur wechselt oder auch in die übernächste, über übernächste etc. Beispielsweise bei unregelmäßig geformten Bearbeitungsbereichen kann es auch sinnvoll sein, dass in einem Teilbereich ein Wechsel in die nächste Fahrspur erfolgt, während in einem anderen Teilbereich ein Wechsel in die übernächste Fahrspur erfolgt, o.ä. Hinsichtlich der Datenmenge lässt sich die Reihenfolge von N Fahrspuren durch ein N-Tupel, beispielsweise einen N-dimensionalen Vektor, ausdrücken.

Es ist zu beachten, dass im Hinblick auf die Reihenfolge zahlreiche Optionen im Rahmen einer Wildschutzbearbeitung ausscheiden, nämlich diejenigen, die an oder in der Nähe der Fluchtkante beginnen. Auch hinsichtlich der Ausrichtung scheiden solche Optionen aus, die in einem größeren Winkel zur Fluchtkante verlaufen. Ein sukzessive zur Fluchtkante hin fortschreitendes Bearbeiten ist nur dann möglich, wenn die einzelnen Fahrspuren parallel oder in einem begrenzten Winkel zur Fluchtkante, zum Beispiel maximal 45° oder maximal 30°, verlaufen. Sofern die genannten drei Parameter variiert werden, sind unterschiedliche Strategien möglich. So kann zum Beispiel eine stufenweise Optimierung erfolgen. Auf einer untersten Optimierungsebene können zwei Parameter konstant gehalten werden (zum Beispiel Positionierung und Ausrichtung), während der dritte Parameter (zum Beispiel die Reihenfolge) variiert wird. Auf einer mittleren Optimierungsebene wird ein Parameter (zum Beispiel die Positionierung) konstant gehalten, während der zweite Parameter (zum Beispiel die Ausrichtung) variiert wird und für den dritten Parameter jeweils der auf der untersten Optimierungsstufe ermittelte optimale Wert eingesetzt wird. Auf einer oberen Optimierungsebene wird ein Parameter (zum Beispiel die Positionierung) variiert, während für den zweiten und dritten Parameter die auf der mittleren und unteren Optimierungsebene gefundenen optimalen Werte eingesetzt werden. Alternativ ist es auch möglich, dass auf einer oberen Optimierungsebene zwei Parameter (zum Beispiel Ausrichtung und Positionierung) gewissermaßen als gleichberechtigte Variationsparameter behandelt werden, so dass Fahrrouten verglichen werden, die sich unter Umständen in zwei Parametern unterscheiden. In einer unteren Optimierungsebene wird der dritte Parameter (zum Beispiel die Reihenfolge) variiert. Für die Bearbeitung des Vorgewendes können zum Teil ebenfalls parallele Fahrspuren angenommen werden, wobei deren Ausrichtung sich an der Grenze des Bearbeitungsbereichs orientieren kann. Allerdings sind insbesondere bei der Bearbeitung des Vorgewendes unterschiedlichste Lenkvorgänge denkbar, insbesondere in Eckbereichen des Vorgewendes. Auch kann im Vorgewende der Versatz zweier paralleler Fahrspuren einen sinnvollen Variationsparameter darstellen.

Bei der Bestimmung einer optimalen Fahrroute sind unterschiedliche Strategien denkbar. In einigen Fällen ist durch die örtlichen Gegebenheiten ein Fluchtrand vorgegeben, zum Beispiel, wenn der Bearbeitungsbereich an genau einer Seite an einen Zufluchtbereich angrenzt. In diesem Fall ist genau diese Seite oder ein Teilbereich derselben, sinnvoll als Fluchtkante definierbar. In anderen Fällen sind unterschiedliche Fluchtkanten oder Kombinationen von Fluchtkanten als Fluchtrand definierbar. In diesem Fall kann sich je nach definiertem Fluchtrand eine mehr oder weniger günstige Fahrroute auffinden lassen. Man kann auch sagen, dass die definierbaren Fluchtränder im Hinblick auf das Optimierungskriterium unterschiedlich günstig sind. Dies wird in einer bevorzugten Ausführungsform dadurch genutzt, dass für jeden einer Mehrzahl von Fluchträndern automatisch aus einer Mehrzahl möglicher Fahrrouten eine entsprechend dem Optimierungskriterium optimale Fluchtrand-Fahrroute ermittelt wird, und automatisch aus den optimalen Fluchtrand-Fahrrouten entsprechend dem Optimierungskriterium die optimale Fahrroute ermittelt wird. Zunächst werden also eine Mehrzahl von Fluchträndern definiert, die unterschiedliche Fluchtkanten und/oder Kombinationen von Fluchtkanten aufweisen. Dann wird - gewissermaßen auf einer unteren Optimierungsebene - für den jeweiligen Fluchtrand eine optimale Fahrroute ermittelt, die als optimale Fluchtrand-Fahrroute bezeichnet wird. Diese ist für den jeweiligen Fluchtrand entsprechend dem Optimierungskriterium optimal, zumindest unter den untersuchten Fahrrouten. Weiterhin wird - gewissermaßen auf eine oberen Optimierungsebene - unter den Fluchtrand-Fahrrouten die optimale Fahrroute ermittelt, indem diese entsprechend dem Optimierungskriterium verglichen werden. Das heißt es wird die entsprechend dem Optimierungskriterium beste Fluchtrand-Fahrroute als optimale Fahrroute ausgewählt. Es werden dann automatisch Steuerdaten erzeugt, die die optimale Fahrroute repräsentieren.

Bei jeder automatischen Optimierung können unterschiedliche Verfahren zur Auffindung der optimalen Lösung bzw. zur Suche nach der optimalen Lösung eingesetzt werden, insbesondere metaheuristische Verfahren wie Simulated Annealing oder genetische bzw. evolutionäre Algorithmen.

Gemäß einer Ausgestaltung basiert das Optimierungskriterium wenigstens teilweise auf einer Minimierung einer Fahrstrecke. "Wenigstens teilweise" bedeutet in diesem Zusammenhang, dass die Minimierung der Fahrstrecke nicht das einzige Ziel sein muss, sondern dass auch andere Werte minimiert bzw. maximiert werden sollen, so dass beispielsweise ein Kompromiss hergestellt wird, der sich von einer alleinigen Minimierung der Fahrstrecke unterscheiden kann. Insbesondere kann vorgesehen sein, die gesamte auf der Fahrroute zurückgelegte Fahrstrecke zu minimieren. Alternativ kann auch vorgesehen sein, die insgesamt für Wendewege notwendige Fahrstrecke zu minimieren. Letztere kann gewissermaßen als "unproduktive" Fahrstrecke angesehen werden.

Alternativ oder zusätzlich kann das Optimierungskriterium wenigstens teilweise auf einer Minimierung einer Fahrzeit basieren. Hierbei kann zum einen die Fahrzeit für die gesamte Fahrroute zugrunde gelegt werden. Es kann aber auch die insgesamt für alle Spurwechsel bzw. Wendeweg notwendige Fahrzeit betrachtet werden, welche wiederum eine "unproduktive" Fahrzeit darstellt. Eine Minimierung der Fahrzeit ist aus unterschiedlichen Gründen nicht zwangsläufig gleichbedeutend mit einer Minimierung der Fahrtstrecke. So könnte es zum Beispiel sein, dass der Bearbeitungsbereich ein Gefälle aufweist, das dazu führt, dass Fahrspuren in einer Richtung schneller durchfahren werden können als in Gegenrichtung. Die Anzahl und individuelle Länge der insgesamt "bergab" bzw. "bergauf" durchfahrenen Fahrspuren kann sich bei Fahrrouten gleicher Länge unterscheiden und somit auch die Fahrzeit, die insgesamt für die Fahrspuren benötigt wird.

Weiterhin alternativ oder zusätzlich kann das Optimierungskriterium wenigstens teilweise auf einer Minimierung eines Energieverbrauchs basieren. Hierbei wird normalerweise der voraussichtliche Energieverbrauch für die gesamte Fahrroute betrachtet. Dieser hängt von der gesamten Fahrstrecke ab, allerdings evtl. auch von anderen Parametern. So kann der Energieverbrauch auch von der Ausrichtung einzelner Fahrspuren abhängen, wenn die Erntemaschine zum Beispiel eine mehr oder weniger starke Steigung bewältigen muss. Auch kann die Anzahl und individuelle Länge der insgesamt "bergab" bzw. "bergauf" durchfahrenen Fahrspuren kann sich unterscheiden.

Ebenfalls alternativ oder zusätzlich kann das Optimierungskriterium wenigstens teilweise auf einer Minimierung einer unbearbeiteten Fläche basieren. Man kann hier auch von einer Maximierung der Abdeckung oder "Coverage" sprechen. Das heißt es soll ein möglichst großer Teil - im Idealfall 100% - des Bearbeitungsbereichs tatsächlich bearbeitet werden. Man könnte hier auch zwischen einer unbearbeiteten Fläche im Innenbereich und einer unbearbeiteten Fläche im Vorgewende differenzieren. Im Allgemeinen kann zwischen einer Minimierung der unbearbeiteten Fläche und eine Minimierung von Fahrzeit, Fahrstrecke und/oder Energieverbrauch ein Konflikt bestehen, so dass es sinnvoll sein kann, die bearbeitete Fläche mit einzubeziehen, um zu vermeiden, dass zum Beispiel eine geringe Fahrzeit auf Kosten einer unzureichenden Abdeckung erreicht wird.

Eine weitere Möglichkeit besteht darin, dass das Optimierungskriterium wenigstens teilweise auf einer Minimierung mehrfach überfahrener Bereiche basiert. Ein mehrfaches Überfahren eines Bereichs kann zum einen die Bodenverdichtung verstärken, was unerwünscht ist, zum anderen kann es bedeuten, dass am Boden liegendes Erntegut überfahren wird und dabei verschmutzt, beschädigt oder sogar in den Boden eingedrückt wird. Außerdem deutet ein mehrfaches Überfahren unter Umständen auf eine suboptimale Effizienz hin, da zur Bearbeitung ein einmaliges Überfahren ausreicht.

Auch besteht die Möglichkeit, dass das Optimierungskriterium wenigstens teilweise auf einer Minimierung einer Fluchtstrecke für das Wild basiert. Die Fluchtstrecke kann dabei als diejenige Strecke definiert sein, die das Wild im ungünstigsten Fall zur Fluchtkante zurücklegen muss, was zum Beispiel einem Abstand zwischen dem Anfangsbereich und der Fluchtkante entsprechen kann. Eine kürzere Fluchtstrecke kann die Wahrscheinlichkeit erhöhen, dass das Wild wie vorgesehen über die Fluchtkante den Zufluchtbereich aufsucht. Die Fluchtstrecke kann zum Beispiel dadurch beeinflusst werden, welche Fluchtkante dem Bearbeitungsbereich oder einem Teilbereich desselben zugeordnet wird.

Unter Umständen kann das Optimierungskriterium in einer Minimierung oder Maximierung einer einzelnen Größe bzw. eines einzelnen Optimierungswertes bestehen, zum Beispiel einer Minimierung der gesamten Fahrstrecke. Je nach Beschaffenheit des Bearbeitungsbereichs, der Art des durchzuführenden Erntevorgangs, den Leistungsdaten der Erntemaschine und anderer Faktoren kann die Minimierung oder Maximierung eines Optimierungswertes bis zu einem gewissen Grad in Konkurrenz mit einer ebenfalls wünschenswerten Minimierung oder Maximierung eines anderen Optimierungswertes stehen. In diesem Fall stellt die isolierte Optimierung eines einzelnen Optimierungswertes oftmals keine zufriedenstellende Lösung dar. Eine Ausgestaltung sieht daher vor, dass das Optimierungskriterium auf der Optimierung einer gewichteten Kombination von Optimierungswerten basiert. Statt von einer gewichteten Kombination kann man normalerweise auch von einer Linearkombination sprechen, wenngleich es prinzipiell denkbar wäre, dass ein Optimierungswert nicht-linear, also zum Beispiel quadratisch, eingeht. Ein Optimierungswert könnte dabei beispielsweise die unbearbeitete Fläche sein, während ein anderer Optimierungswert die Fahrzeit ist. Das Optimierungskriterium könnte dann in der Minimierung einer Summe liegen, wobei ein Summand proportional zur Fahrzeit und ein anderer Summand proportional zur unbearbeiteten Fläche ist. Durch Wahl geeigneter Gewichtungsfaktoren bzw. Normierungsfaktoren kann das relative Gewicht des jeweiligen Optimierungswertes angepasst werden. Die Summe kann auch als "Gesamt-Optimierungswert" $W_{gesamt}$ angesehen werden, welcher wie folgt definiert ist:

$$W_{gesamt} = \sum_k a_k W_k$$

wobei $W_k$ den k-ten Optimierungswert, zum Beispiel die Fahrstrecke, Fahrzeit etc. bezeichnet und $a_k$ der jeweilige Gewichtungsfaktor ist.

Alternativ kann das Optimierungskriterium auf einer Pareto-Optimierung mehrerer Optimierungswerte basieren. Das heißt es wird - innerhalb eines untersuchten Parameterbereichs - ein Parametersatz gesucht, der die Optimierungswerte insoweit optimiert, als kein anderer Parametersatz einen der Optimierungswerte demgegenüber verbessert, ohne einen anderen zu verschlechtern. ZUM BEISPIEL könnte eine Fahrtroute ein Pareto-Optimum hinsichtlich Fahrzeit und Fahrstrecke darstellen, wenn keine andere Fahrtroute eine kürzere Fahrzeit liefert, ohne eine längere Fahrstrecke zu liefern, und keine andere Fahrtroute eine kürzere Fahrstrecke liefert, ohne eine längere Fahrzeit zu liefern.

Bevorzugt wird das Vorgewende möglichst vollständig bearbeitet. Daher ist es bevorzugt, dass wenigstens eine Fahrroute eine Bearbeitung wenigstens eines Eckbereichs im Vorgewende vorsieht, bei welcher die Erntemaschine wenigstens eine Fahrtrichtungsumkehr zwischen Vorwärts- und Rückwärtsfahrt durchführt. Die Eckbereiche, welche durch eine eckige Kontur begrenzt werden, lassen sich - unter anderem aufgrund des minimal möglichen Kurvenradius der Erntemaschine - nicht allein in Vorwärtsfahrt vollständig bearbeiten. Daher ist für eine zumindest annähernd vollständige Bearbeitung eines Eckbereichs (also für ein "Freistechen" desselben) eine Fahrtrichtungsumkehr notwendig. Insgesamt ist normalerweise eine weitere Fahrtrichtungsumkehr vorzusehen. Zum Beispiel kann die Erntemaschine geradeaus vorwärts bis in die Ecke hineinfahren, dann gerade zurücksetzen und schließlich in eine vorwärts gefahrene Kurvenfahrt wechseln, wobei sie gewissermaßen der Ecke ausweicht. Es sind je nach Geometrie und Fahreigenschaften der Erntemaschine sowie je nach Geometrie des Eckbereichs unterschiedliche Fahrmanöver denkbar, die allerdings stets eine Fahrtrichtungsumkehr erfordern, normalerweise gefolgt von einer weiteren Fahrtrichtungsumkehr.

Eine Ausführungsform sieht vor, dass unterschiedlichen Teilbereichen des Bearbeitungsbereichs unterschiedliche Fluchtkanten des Fluchtrands zugeordnet werden. Das heißt es werden unterschiedliche Fluchtkanten identifiziert und der Bearbeitungsbereich wird in eine Mehrzahl von Teilbereichen eingeteilt. Des Weiteren werden unterschiedlichen Teilbereichen unterschiedliche Fluchtkanten zugeordnet (und umgekehrt). Somit ergibt sich in unterschiedlichen Teilbereichen zwangsläufig eine unterschiedliche Bearbeitung des Innenbereichs, da die Bearbeitung in Richtung auf unterschiedliche Fluchtkanten hin erfolgt.

Gemäß einer Ausgestaltung sieht wenigstens eine Fahrroute eine Wildschutzbearbeitung einer Mehrzahl von Teilbereichen vor, welchen unterschiedliche Fluchtkanten zugeordnet sind, wobei das Vorgewende aller Teilbereiche bearbeitet wird, bevor der Innenbereich unterschiedlicher Teilbereiche bearbeitet wird, entsprechend der dem jeweiligen Teilbereich zugeordneten Fluchtkante. Das heißt in diesem Fall wird hinsichtlich der Innenbereiche eine nach Teilbereichen unterschiedliche und gegebenenfalls aufeinanderfolgende Bearbeitung vorgenommen. Dies ist im Hinblick auf die unterschiedlichen Fluchtkanten auch sinnvoll. Das Vorgewende wird allerdings vorab in allen Teilbereichen bearbeitet.

Gemäß einer Ausgestaltung sieht wenigstens eine Fahrroute eine Wildschutzbearbeitung einer Mehrzahl von Teilbereichen vor, wobei jeweils das Vorgewende eines Teilbereichs bearbeitet wird und danach der Innenbereich dieses Teilbereichs, bevor ein nächster Teilbereich bearbeitet wird. Das heißt in diesem Fall werden die Teilbereiche nacheinander bearbeitet, wobei das Vorgewende und der Innenbereich eines Teilbereichs jeweils - mittels einer Wildschutzbearbeitung - bearbeitet werden, bevor der nächst Teilbereich bearbeitet wird. Auch bei diesem werden wiederum Vorgewende und Innenbereich bearbeitet, wonach ein dritter Teilbereich bearbeitet werden kann etc. Das heißt es erfolgt eine sequenzielle Bearbeitung der Teilbereiche, wobei die Bearbeitung eines Teilbereichs jeweils sowohl die Bearbeitung des in diesem Teilbereich befindlichen Vorgewendes als auch des in diesem Teilbereich befindlichen Innenbereichs beinhaltet. Sofern einer Mehrzahl von Teilbereichen die gleiche Fluchtkante zugeordnet ist, beginnt die Bearbeitung in dem am weitesten von der Fluchtkante entfernte Teilbereich und wird dann mit dem in Richtung der Fluchtkante nächsten Teilbereich fortgesetzt.

Eine Ausführungsform sieht vor, dass für eine Fahrroute ein Fluchtrand mit voneinander getrennten Fluchtkanten definiert wird, eine Mehrzahl von zwischen den Fluchtkanten angeordneten, getrennten Vorgewende-Abschnitten des Vorgewendes definiert wird, und die Fahrroute vor der Bearbeitung des Innenbereichs in einem Durchquerungsbereich ein Durchqueren des Innenbereichs zum Wechseln zwischen zwei Vorgewende-Abschnitten vorsieht. In diesem Fall ist kein zusammenhängendes Vorgewende gegeben, da eine Mehrzahl voneinander getrennter Fluchtkanten definiert wurde, die ausgespart werden müssen. Um das Vorgewende dennoch vollständig zu bearbeiten, müsste die Erntemaschine entweder den Bearbeitungsbereich verlassen oder sie muss den Innenbereich durchqueren. Letzteres geschieht in dem Durchquerungsbereich. Dieser kann bevorzugt genau einmal durchquert werden, um von einem Vorgewende-Abschnitt zum anderen zu gelangen. Sinnvollerweise wird der Durchquerungsbereich dabei auch bearbeitet. Die Wahrscheinlichkeit, dass beim einmaligen Durchqueren des Innenbereichs versehentlich Wild verletzt wird, ist gering und stellt somit ein akzeptables Risiko dar. Dafür können die unterschiedlichen Fluchtkanten genutzt werden, wodurch sich zum Beispiel kürzere Wege für das Wild ergeben können als bei einer einzigen Fluchtkante.

Es ist vorteilhaft, wenn beiderseits des Durchquerungsbereichs Teilbereiche mit unterschiedlichen Fluchtkanten definiert werden. Der Durchquerungsbereich verbindet zwei Vorgewende-Abschnitte, die durch Fluchtkanten voneinander getrennt sind. Dementsprechend muss auf einer dem Durchquerungsbereich gegenüberliegenden Seite eines jeden Teilbereichs jeweils eine Fluchtkante angeordnet sein. Das heißt jedem Teilbereich kann eine eigene Fluchtkante zugeordnet werden. Dies ist auch insofern sinnvoll, als das Wild andernfalls gezwungen wäre, durch den Durchquerungsbereich zu laufen, welcher keine Deckung bietet. Außerdem würden sich weite Wege ergeben, die das Wild zurücklegen müsste. Werden allerdings die beiden Teilbereiche mit unterschiedlichen Fluchtkanten definiert, kann das Wild auf einem vergleichsweise kurzen Weg zur jeweiligen Fluchtkante gelangen. Vorteilhaft wird der Durchquerungsbereich ungefähr auf halbem Weg zwischen den Fluchtkanten vorgesehen, so dass der maximal mögliche Weg für das Wild minimiert wird. Beim Erntevorgang kann der Durchquerungsbereich als Anfangsbereich dienen, von dem aus der Innenbereich beider Teilbereiche abgeerntet wird, oder der Anfangsbereich kann an den Durchquerungsbereich angrenzen. Dabei kann entweder erst der eine Teilbereich und dann der andere Teilbereich abgeerntet werden oder die Erntemaschine kann zwischen beiden Teilbereichen hin und her wechseln (was allerdings unter Umständen wenig effizient ist).

Die Fahrroute wird bevorzugt im Hinblick auf die tatsächlichen Eigenschaften derjenigen Erntemaschine geplant, die den Erntevorgang ausführen soll. Genauer gesagt, es ist bevorzugt, dass die Fahrroute spezifisch für die ausführende Erntemaschine unter Berücksichtigung von Geometrie und/oder Fahreigenschaften der Erntemaschine ermittelt wird. Sofern die Erntemaschine beim Erntevorgang ein Anbaugerät nutzt, welches bei Bedarf demontiert und durch ein anderes Anbaugerät ersetzt werden kann, bezieht der Begriff "Geometrie der Erntemaschine" ausdrücklich auch die Geometrie des Anbaugeräts mit ein. Mögliche geometrische Eigenschaften, die berücksichtigt werden können, sind Länge und Breite der Erntemaschine, Arbeitsbreite (also die Breite desjenigen Bereichs, in dem tatsächlich Erntegut geerntet wird), aber auch die Lage der Antriebsmittel (Räder, gegebenenfalls aber auch Raupenketten). Um eine realistischere Repräsentation der Erntemaschine zu erreichen, kann diese auch zum Beispiel als Polygon simuliert werden. Normalerweise in Kombination mit einer Berücksichtigung der Geometrie, können auch die Fahreigenschaften der Erntemaschine berücksichtigt werden. Die Fahreigenschaften können eine mögliche Höchstgeschwindigkeit (gegebenenfalls nach Vorwärts- und Rückwärtsfahrt zu unterscheiden), ein Beschleunigungs- und/oder Bremsvermögen, ein minimaler Kurvenradius, ein maximaler Lenkwinkel, eine Geschwindigkeit einer Lenkwinkeländerung etc. umfassen. Es kann auch danach unterschieden werden, auf welchem Untergrund sich die Landmaschine bewegt, also zum Beispiel ansteigend, eben oder abfallend, trocken oder feucht etc. Durch Berücksichtigung wenigstens einer der genannten Größen ist es zum einen möglich, die fahrtechnischen Möglichkeiten der Erntemaschine voll auszuschöpfen, also zum Beispiel einen minimalen Kurvenradius auszunutzen, zum anderen wird vermieden, evtl. Fahrmanöver einzuplanen, die die betreffende Erntemaschine gar nicht ausführen kann.

Einerseits ist es denkbar, dass die Erntemaschine über ein Computersystem (das heißt eine Auswertungs- bzw. Recheneinheit) verfügt, das in der Lage ist, anhand ausreichender Informationen über den Bearbeitungsbereich sowie mögliche Zufluchtbereiche die optimale Fahrroute zu ermitteln. In vielen Fällen ist es allerdings effizienter, wenn für die Erntemaschine die Fahrroute extern ermittelt wird und die Steuerdaten extern erzeugt und an die Erntemaschine übermittelt werden. Die Ermittlung der Fahrroute und die Erzeugung der Steuerdaten erfolgen dann über ein zentrales System bzw. eine zentrale Auswerteeinheit, die sogar stationär in einem Gebäude untergebracht sein kann, das nicht einmal in der Nähe des Bearbeitungsbereichs sein muss. Durch drahtlose Kommunikation könnten die erzeugten Steuerdaten an die Erntemaschine übermittelt werden, die diese dann zum Abfahren der Fahrroute nutzt. Durch die zentrale, externe Verarbeitung sind auf Seiten der Erntemaschine nur wenige Ressourcen im Hinblick auf Rechenkapazität und Speicherplatz notwendig.

Es können Steuerdaten für eine autonom fahrende Erntemaschine erzeugt werden, welche die Feldbearbeitung anhand der Steuerdaten autonom durchführt. Das heißt soweit dieser Erntemaschine die Steuerdaten zur Verfügung stehen, kann sie ohne menschliches Eingreifen die ermittelte Fahrroute abfahren und die zugehörige Feldbearbeitung durchführen. Die Erntemaschine kann zur Navigation unterschiedliche interne und/oder externe Sensoren nutzen. Unter Umständen kann sie sich wenigstens teilweise an einer Struktur des Bearbeitungsbereichs orientieren, zum Beispiel einer Struktur eines Bestandes, welchen der Bearbeitungsbereich aufweist (Bestandsgrenze, Reihen etc.). Es können, auch in Abhängigkeit von der Beschaffenheit des Bearbeitungsbereichs, unterschiedliche Sensoren verwendet werden, zum Beispiel mechanische oder optische Sensoren, aktive oder passive Sensoren. Insbesondere kann die Erntemaschine einen GNSS-Empfänger nutzen, um ihre aktuelle Ist-Position festzustellen und mit einer der optimalen Fahrroute entsprechenden Soll-Position zu vergleichen.

Es können auch Steuerdaten für eine durch einen Fahrer gelenkte Erntemaschine erzeugt werden, so dass anhand der Steuerdaten Steueranweisungen für den Fahrer erzeugt werden können. Dabei können die Steuerdaten innerhalb der Erntemaschine zur Verfügung stehen und in Steueranweisungen umgesetzt werden. Alternativ wäre es auch denkbar, dass anhand der Steuerdaten extern Steueranweisungen erstellt und an die Erntemaschine übermittelt werden. Es ist auch denkbar, dass ein und dieselbe Erntemaschine zeitweise autonom gelenkt wird und zeitweise durch einen Fahrer. Die Steueranweisungen können visuell und/oder akustisch ausgegeben werden. Die Steueranweisungen könnten den Fahrer explizit darauf hinweisen, wie er die Erntemaschine zu lenken hat, oder es könnte zum Beispiel auf einem Bildschirm eine Soll-Fahrlinie angezeigt werden, anhand derer sich der Fahrer orientieren kann.

Die Aufgabe wird weiterhin gelöst mit einem Computersystem zur Fahrroutenplanung für einen Erntevorgang, bei welchem ein vorgegebener Bearbeitungsbereich von einer Erntemaschine entsprechend einer Fahrroute durchfahren wird, wobei, wenn

- für eine Fahrroute ein Fluchtrand definiert ist, mit wenigstens einer Fluchtkante des Bearbeitungsbereichs, welche einem Zufluchtbereich für Wild außerhalb des Bearbeitungsbereichs zugewandt ist,
- ein Innenbereich des Bearbeitungsbereichs definiert ist sowie ein Vorgewende, welches außenseitig des Innenbereichs unter Aussparung des Fluchtrands angeordnet ist,

das Computersystem dazu eingerichtet ist:

- die Fahrroute automatisch derart zu ermitteln, dass wenigstens in einem Teilbereich des Bearbeitungsbereichs eine Wildschutzbearbeitung erfolgt, indem zunächst das Vorgewende bearbeitet wird und danach der Innenbereich unter Nutzung des Vorgewendes für Wendevorgänge, wobei die Bearbeitung des Innenbereichs in einem von einer Fluchtkante beabstandeten Anfangsbereich begonnen und sukzessive zu dieser Fluchtkante hin fortgesetzt wird, wodurch ein bearbeiteter Bereich sukzessive vom Anfangsbereich zur Fluchtkante hin ausgedehnt wird, und

- automatisch Steuerdaten zur Steuerung der Erntemaschine während des Erntevorgangs zu erzeugen, wobei die Steuerdaten eine ermittelte Fahrroute repräsentieren.

Die genannten Begriffe wurden bereits oben mit Bezug auf das erfindungsgemäße Verfahren erläutert und werden daher nicht nochmals erklärt. Das Computersystem weist wenigstens einen Computer bzw. Rechner bzw. eine Datenverarbeitungseinheit auf. Es kann allerdings auch weitere Komponenten aufweisen, zum Beispiel drahtlose und/oder drahtgebundene Schnittstellen zur ein- oder beidseitigen Kommunikation mit anderen Vorrichtungen. Bevorzugt ist das Computersystem dazu eingerichtet, den Fluchtrand automatisch zu definieren und/oder den Innenbereich und das Vorgewende automatisch zu definieren. Weitere vorteilhafte Ausgestaltungen des erfindungsgemäßen Computersystems entsprechen denen des erfindungsgemäßen Verfahrens.

Insbesondere kann es sich bei dem Computersystem um ein Farm-Management-Informationssystem handeln, welches außerhalb der Erntemaschine angeordnet ist, zum Beispiel stationär innerhalb eines Gebäudes. Das Computersystem könnte auch in einer mobilen Einheit (Laptop, Tablet, Smartphone etc.) angeordnet sein, welche Steueranweisungen für den Fahrer anzeigt oder Steuerdaten (normalerweise drahtlos) an die Erntemaschine übermittelt. Allgemeiner gesprochen kann das Computersystem extern bezüglich der Erntemaschine ausgebildet und dazu eingerichtet sein, die Steuerdaten zur Übertragung an die Erntemaschine zu erzeugen. Es kann eine Schnittstelle zur Datenübertragung an die Erntemaschine aufweisen und dazu eingerichtet sein, die Steuerdaten (drahtgebunden oder drahtlos) an die Erntemaschine zu übertragen.

Alternativ kann das Computersystem in eine Erntemaschine integriert sein, das heißt es kann ein Teil der Erntemaschine sein und innerhalb dieser angeordnet sein. Das Computersystem kann in jedem Fall teilweise softwaremäßig realisiert sein. Unabhängig davon, ob das Computersystem Teil der Erntemaschine ist oder nicht, kann es eingerichtet sein, die Erntemaschine entsprechend der Steuerdaten zu steuern.

Entsprechend der zweiten Alternative wird durch die Erfindung auch eine Erntemaschine zur Verfügung gestellt mit einem Computersystem zur Fahrroutenplanung für einen Erntevorgang, bei welchem ein vorgegebener Bearbeitungsbereich von der Erntemaschine entsprechend einer Fahrroute durchfahren wird, wobei, wenn

- für eine Fahrroute ein Fluchtrand definiert ist, mit wenigstens einer Fluchtkante des Bearbeitungsbereichs, welche einem Zufluchtbereich für Wild außerhalb des Bearbeitungsbereichs zugewandt ist, und
- ein Innenbereich des Bearbeitungsbereichs definiert ist sowie ein Vorgewende, welches außenseitig des Innenbereichs unter Aussparung des Fluchtrands angeordnet ist,

das Computersystem dazu eingerichtet ist:

- die Fahrroute automatisch derart zu ermitteln, dass wenigstens in einem Teilbereich des Bearbeitungsbereichs eine Wildschutzbearbeitung erfolgt, indem zunächst das Vorgewende bearbeitet wird und danach der Innenbereich unter Nutzung des Vorgewendes für Wendevorgänge, wobei die Bearbeitung des Innenbereichs in einem von einer Fluchtkante beabstandeten Anfangsbereich begonnen und sukzessive zu dieser Fluchtkante hin fortgesetzt wird, wodurch ein bearbeiteter Bereich sukzessive vom Anfangsbereich zur Fluchtkante hin ausgedehnt wird, und
- automatisch Steuerdaten zur Steuerung der Erntemaschine während des Erntevorgangs zu erzeugen, wobei die Steuerdaten eine ermittelte Fahrroute repräsentieren.

Bevorzugt ist das Computersystem dazu eingerichtet, den Fluchtrand automatisch zu definieren und/oder den Innenbereich und das Vorgewende automatisch zu definieren. Wiederum entsprechen bevorzugte Ausführungsformen der erfindungsgemäßen Erntemaschine denen des erfindungsgemäßen Verfahrens.

Durch die Erfindung wird weiterhin ein Computerprogrammprodukt zur Verfügung gestellt, mit Programmcodemitteln, welche ein Computersystem befähigen, die oben beschriebenen Schritte auszuführen. Das Computerprogrammprodukt beinhaltet also eine Software, die auf der Hardware des Computersystems die genannten Schritte implementiert. Es kann in Form eines Datenträgers vorliegen, auf dem die Software bzw. die Programmcodemittel (flüchtig oder nicht-flüchtig) gespeichert sind. Der Datenträger kann dabei auch dauerhaft in das Computersystem integriert bzw. integrierbar sein.

Im Folgenden wird die Erfindung anhand von Figuren beschrieben. Die Figuren sind lediglich beispielhaft und schränken den allgemeinen Erfindungsgedanken nicht ein. Es zeigen

Fig. 1    eine Draufsicht eines Teils eines Bearbeitungsbereichs, eines Zufluchtbereichs, einer Erntemaschine sowie eines erfindungsgemäßen Computersystems zur Fahrroutenplanung;

Fig. 2    eine Draufsicht des Bearbeitungsbereichs aus Fig.1 mit der Erntemaschine in einem ersten Teil einer ersten Fahrroute, einschließlich einer vergrößerten Detaildarstellung;

Fig. 3    eine Draufsicht des Bearbeitungsbereichs aus Fig.1 mit der Erntemaschine in einem zweiten Teil der ersten Fahrroute;

Fig. 4    eine Draufsicht des Bearbeitungsbereichs aus Fig.1 mit der Erntemaschine auf einer zweiten Fahrroute;

Fig. 5    eine Draufsicht des Bearbeitungsbereichs aus Fig.1 mit der Erntemaschine auf einer dritten Fahrroute; sowie

Fig. 6    ein Flussdiagramm eines erfindungsgemäßen Verfahrens zur Fahrroutenplanung.

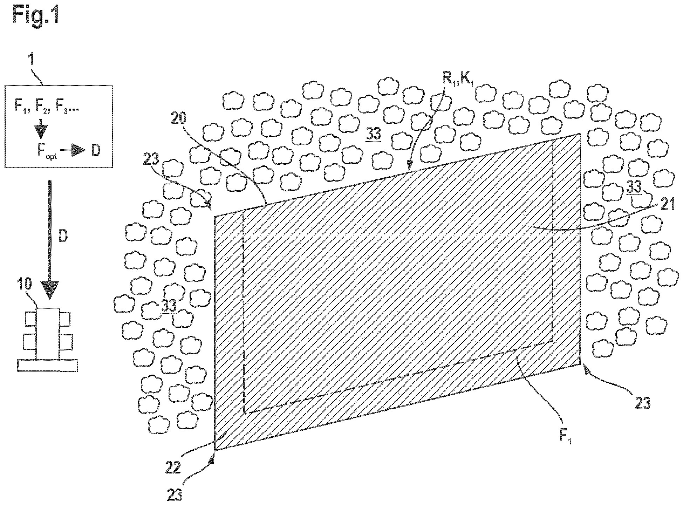

Fig. 1 zeigt eine Draufsicht eines Bearbeitungsbereichs 20, das heißt eines Feldes, welches teilweise von einem Zufluchtbereich 33, in diesem Fall einem Waldstück, umgeben ist. Stark schematisiert sind eine Erntemaschine 10, zum Beispiel ein Mähdrescher, sowie ein erfindungsgemäßes Computersystem 1 zur Fahrroutenplanung dargestellt, das in diesem Fall außerhalb der Erntemaschine 10 angeordnet ist, beispielsweise in einem Gebäude, das weit von dem Bearbeitungsbereich 20 entfernt sein kann. Es versteht sich, dass das Computersystem 1 und die Erntemaschine 10 in Fig.1 nicht maßstäblich in Relation zueinander oder zum Bearbeitungsbereich 20 dargestellt sind. Das Computersystem 1 kann durch ein Farm-Management-Informationssystem gebildet sein oder einen Teil desselben darstellen. Es weist eine hier nicht einzeln dargestellte Schnittstelle zur drahtlosen Datenübertragung an die Erntemaschine 10 auf. Es ist vorgesehen, dass die Erntemaschine 10 im Bearbeitungsbereich 20 einen Erntevorgang durchführt, beispielsweise das Mähen von Gras. Der Zufluchtbereich 33 wird als mögliches Rückzugsgebiet für Wild angesehen, welches aus dem Bearbeitungsbereich 20 flieht, wenn der Erntevorgang durchgeführt wird.

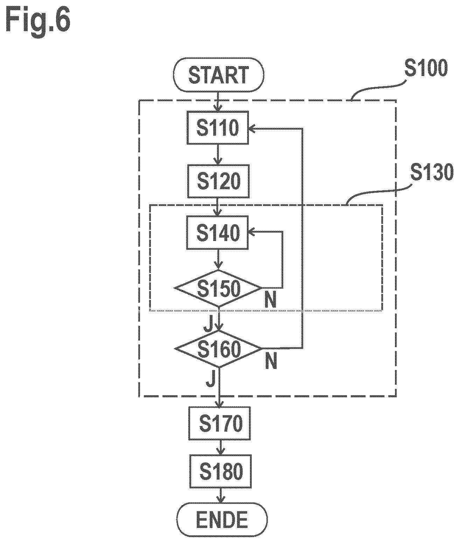

Vor dem Erntevorgang führt das Computersystem 1 ein erfindungsgemäßes Verfahren zur Fahrroutenplanung oder Fahrroutenoptimierung durch, welches anhand des Flussdiagramms in Fig. 6 sowie anhand der Draufsicht des Bearbeitungsbereichs 20 in Fig. 1 bis 5 erläutert wird. Das Computersystem 1 verfügt über verschiedene Daten betreffend das Bearbeitungsbereich 20, insbesondere die Geometrie desselben, sowie betreffend die Ausdehnung des Zufluchtbereichs 33. Optional können weitere Daten wie beispielsweise die lokale Bodenbeschaffenheit oder ein eventuell vorhandenes Gefälle einbezogen werden. Des Weiteren verfügt das Computersystem 1 über Daten betreffend die Geometrie der Erntemaschine 10, insbesondere eine effektive Arbeitsbreite derselben, sowie ihre Fahreigenschaften, zum Beispiel ihre Höchstgeschwindigkeit in Vorwärts- und Rückwärtsfahrt, ihren minimalen Wenderadius etc. Weiterhin können die Leistungsdaten der Erntemaschine 10 in Abhängigkeit von Bodenbeschaffenheit, Gefälle oder anderen Faktoren bekannt sein, zum Beispiel eine hiervon abhängige Geschwindigkeit, ein Treibstoffverbrauch oder dergleichen.

Die Fahrroutenplanung dient der Auffindung einer optimalen Fahrroute $F_{opt}$ für die Erntemaschine 10. Hierfür wird ein Optimierungskriterium definiert und eine Optimierung wird auf Basis des Optimierungskriteriums durchgeführt. Dieses kann beispielsweise die Minimierung einer gesamten Fahrstrecke sein, die Minimierung einer gesamten Fahrzeit, die Minimierung eines Treibstoffverbrauchs, die Minimierung einer unbearbeiteten Fläche, die Minimierung einer Fluchtstrecke für das Wild oder dergleichen. Es ist auch möglich, dass mehrere Teilkriterien definiert werden, zwischen denen eine gewisse Konkurrenz bestehen kann. Zum einen kann die Minimierung einer gewichteten Kombination verschiedener Optimierungswerte (zum Beispiel Fahrstrecke, Fahrzeit etc.) angestrebt werden, zum anderen kann auch eine Pareto-Optimierung hinsichtlich verschiedener Optimierungswerte durchgeführt werden.

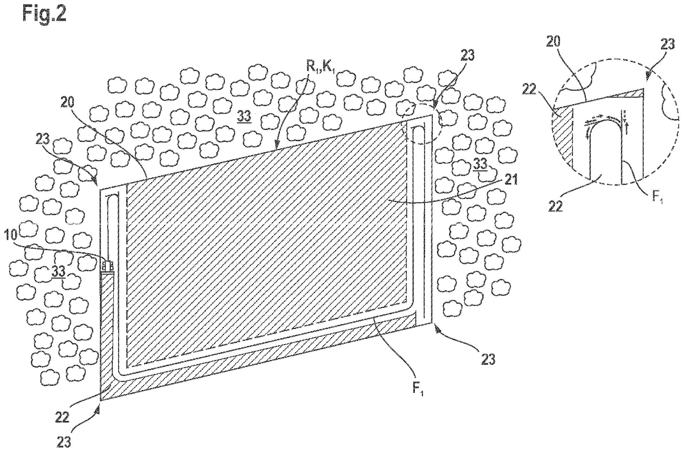

Bei der Planung der Fahrtroute $F_1$-$F_3$ definiert das Computersystem 1 zunächst einen Fluchtrand $R_1$, $R_2$, der wenigstens eine Fluchtkante $K_1$ -$K_3$ aufweist. Jede Fluchtkante $K_1$-$K_3$ ist dem Zufluchtbereich 33 zugewandt und grenzt an diesen an. Weiterhin definiert das Computersystem 1 einen Innenbereich 21 sowie ein Vorgewende 22. Letzteres ist randseitig des Innenbereichs 21 angeordnet, allerdings nicht umlaufend, sondern unter Aussparung des Fluchtrands $R_1$, $R_2$. In Fig. 1 wird für eine erste Fahrroute $F_1$ ein erster Fluchtrand $R_1$ mit einer einzigen ersten Fluchtkante $K_1$ definiert. Dementsprechend ergibt sich ein U-förmiges Vorgewende 22, das Randbereiche der bezüglich Fig.1-3 oberen Seite des Bearbeitungsbereichs 20 umfasst. Der dazwischen liegende Teil der genannten Seite bildet die erste Fluchtkante $K_1$. Die jeweilige Fahrtroute $F_1$-$F_3$ ist so angelegt, dass eine Wildschutzbearbeitung durchgeführt wird. Dabei wird zunächst das Vorgewende 22 bearbeitet und danach der Innenbereich 21. Fig. 2 zeigt einen Zustand, in welchem die Erntemaschine 10 das Vorgewende 22 bereits teilweise abgeerntet hat. Dementsprechend ist dort der (schraffiert dargestellte) Bestand schon teilweise entfernt.

Wie in der vergrößerten Detaildarstellung in Fig. 2 erkennbar ist, beinhaltet die Fahrroute $F_1$ eine Bearbeitung von Eckbereichen 23 im Vorgewende 22, wobei spezielle Fahrmanöver ausgeführt werden, um eine möglichst hohe Abdeckung zu erreichen, also möglichst viel Bestand zu erfassen. Im vorliegenden Beispiel fährt die Erntemaschine 10 zunächst gerade auf den Rand des Vorgewendes 22 zu, setzt dann ebenfalls gerade zurück, fährt dann zunächst in einer Linkskurve vorwärts, wechselt wieder in Geradeausfahrt, setzt wieder zurück, fährt eine weitere Linkskurve vorwärts und wechselt schließlich in die Geradeausfahrt. Das heißt es wird insgesamt viermal eine Fahrtrichtungsumkehr zwischen Vorwärts- und Rückwärtsfahrt durchgeführt, was zwar die Fahrstrecke und Fahrzeit erhöht, aber die unbearbeitete Fläche verkleinert. Außerdem kann der Eckbereich 23 im Weiteren nahezu vollumfänglich befahren werden, ohne dass der Bestand überfahren wird.

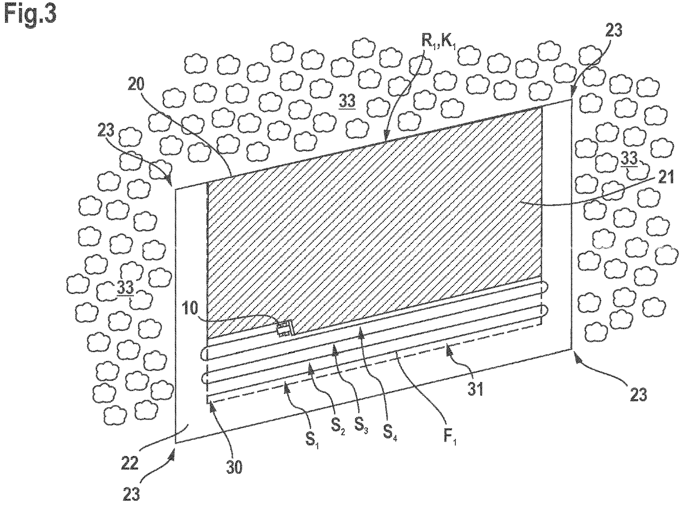

Nach dem Abernten des Vorgewendes 22 beginnt die Erntemaschine 10 die Bearbeitung des Innenbereichs 21. Sie startet dabei in einem Anfangsbereich 30, der von der Fluchtkante $K_1$ entfernt ist und dieser im vorliegenden Fall bezüglich des Innenbereichs 21 gegenüberliegt. Der Innenbereich 21 wird mittels paralleler Fahrspuren $S_1$-$S_4$ abgefahren, welche im Vorgewende 22 durch bogenartige Wendewege (ohne Bezugszeichen) verbunden sind. Gemäß Fig. 3 verlaufen die Fahrspuren $S_1$-$S_4$ parallel zur ersten Fluchtkante $K_1$. Die Reihenfolge ist so gewählt das zunächst eine erste Fahrspur $S_1$, dann eine zweite Fahrspur $S_2$, eine dritte Fahrspur $S_3$ und eine vierte Fahrspur $S_4$ durchfahren werden. Die Bearbeitung schreitet also sukzessive in Richtung der ersten Fluchtkante $K_1$ fort, so dass sich ein bearbeiteter Bereich 31 nach und nach in Richtung der ersten Fluchtkante $K_1$ ausdehnt. Im Innenbereich 21 befindliches Wild kann während des gesamten Erntevorgangs über die Fluchtkante $K_1$ in den dahinter liegenden Zufluchtbereich 33 fliehen.

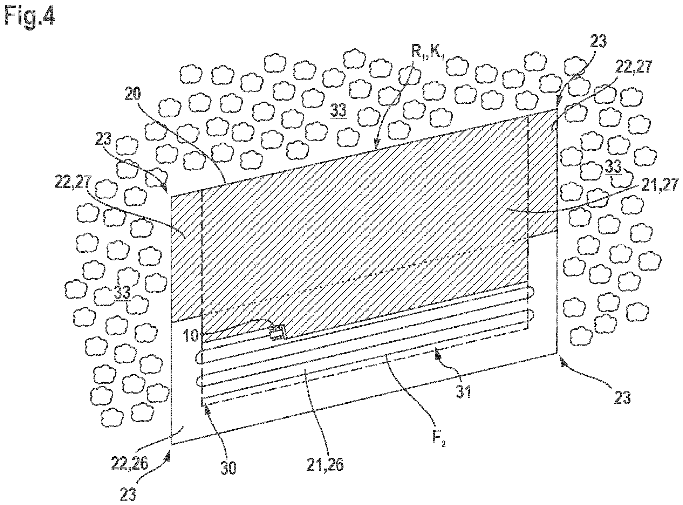

Fig. 4 illustriert eine zweite Fahrspur $F_2$, für die wiederum der erste Fluchtrand $R_1$ mit der ersten Fluchtkante $K_1$ definiert wurde. Allerdings wurde in diesem Fall der Bearbeitungsbereich 20 in einen ersten Teilbereich 26 und einen zweiten Teilbereich 27 unterteilt. Dabei wird für jeden der Teilbereiche 26, 27 jeweils eine Wildschutzbearbeitung durchgeführt. D. h., es wird zunächst nur das Vorgewende 22 im ersten Teilbereich 26 bearbeitet, gefolgt von einer Bearbeitung des Innenbereichs 21 im ersten Teilbereich 26, welcher Zustand in Fig. 4 dargestellt ist. Auch hier beginnt die Bearbeitung bezogen auf den ersten Teilbereich 26 wiederum in einem Anfangsbereich 30, der von der ersten Fluchtkante $K_1$ beabstandet ist, und die Bearbeitung wird nach und nach in Richtung auf die erste Fluchtkante $K_1$ fortgesetzt, allerdings nur bis zur Grenze des zweiten Teilbereichs 27. Im weiteren Verlauf wird dann das Vorgewende 22 im zweiten Teilbereich 27 abgeerntet und schließlich der Innenbereich 21 im zweiten Teilbereichs 27, wobei wiederum in einem von der Fluchtkante $K_1$ beabstandeten Anfangsbereich begonnen wird, der insbesondere an der Grenze zum ersten Teilbereich 26 liegen kann.

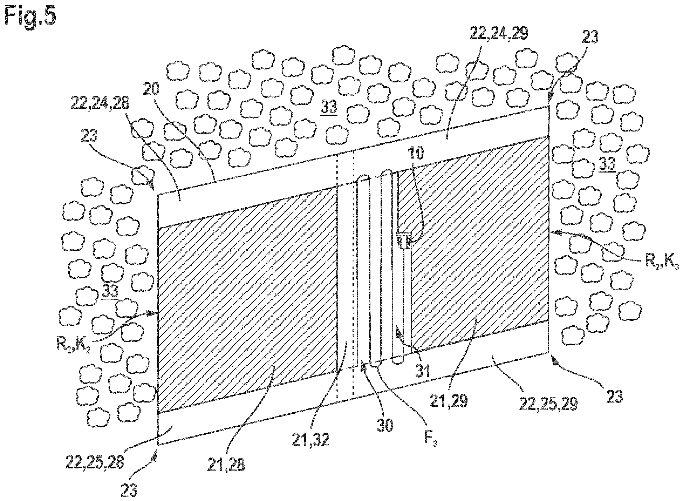

Fig. 5 zeigt die Erntemaschine 10 auf einer dritten Fahrtroute $F_3$, für die ein zweiter Fluchtrand $R_2$ definiert wurde, der eine zweite Fluchtkante $K_2$ (als mittlerer Teil der in Fig.5 linken Seite des Bearbeitungsbereichs 20) und eine dieser gegenüberliegende dritte

Fluchtkante $K_3$ (als mittlerer Teil der in Fig.5 rechten Seite des Bearbeitungsbereichs 20) aufweist. Da das Vorgewende 22 beide Fluchtkanten $K_2$, $K_3$ ausspart, ergeben sich zwei getrennte Vorgewende-Abschnitte 24, 25. Während der Bearbeitung des Vorgewendes 22 wird der Innenbereich 21 in einem Durchquerungsbereich 32 durchquert, um von einem Vorgewende-Abschnitt 24 zum anderen Vorgewende-Abschnitt 25 zu gelangen. Beiderseits des Durchquerungsbereichs 32 sind ein dritter Teilabschnitt 28 sowie ein vierter Teilabschnitt 29 definiert. Für die folgende Bearbeitung des Innenbereichs 21 ist dem dritten Teilbereich 28 die zweite Fluchtkante $K_2$ zugeordnet, während dem vierten Teilbereich 29 die dritte Fluchtkante $K_3$ zugeordnet ist. Die in Fig. 5 gezeigte Bearbeitung des vierten Teilbereichs 29 beginnt in einem Anfangsbereich 30, der an den Durchquerungsbereich 32 angrenzt, und wird sukzessive zur dritten Fluchtkante $K_3$ hin fortgesetzt. Entsprechend beginnt auch die Bearbeitung des dritten Teilbereichs 28 nahe dem Durchquerungsbereich 32 und wird sukzessive zur zweiten Fluchtkante $K_2$ hin fortgesetzt.

Die Fahrroutenplanung beinhaltet eine Fahrroutenoptimierung, bei welcher die von dem Computersystem 1 gewissermaßen in verschachtelter Form auf (wenigstens) zwei Ebenen durchgeführt. Man kann davon sprechen, dass auf einer oberen Ebene, bei S100 im Flussdiagramm von Fig. 6, ein optimaler Fluchtrand $R_{opt}$ ermittelt wird, während auf einer unteren Ebene bei S130 eine optimale Fluchtrand-Fahrroute $F_{R,opt}$ für den jeweiligen Fluchtrand $R_1$, $R_2$ ermittelt wird.

Auf der oberen Ebene wird bei S110 ein Fluchtrand $R_1$, $R_2$ ausgewählt, welcher jeweils eine oder mehrere Fluchtkanten $K_1$-$K_3$ aufweisen kann. Anschließend werden in Schritt S120 der Innenbereich 21 und das Vorgewende 22 definiert. Optional können hier auch Teilbereich 26-29 definiert werden. Für den Fluchtrand $R_1$, $R_2$ wird nun in Schritt S140 eine Fahrroute $F_1$-$F_3$ ermittelt oder geplant, zum Beispiel die in Fig.2 und 3 gezeigte erste Fahrroute $F_1$. In Schritt S150 wird überprüft, ob bereits die optimale Fluchtrand-Fahrroute $F_{R,opt}$ gefunden wurde, was in der Regel für die erste Fahrroute $F_1$ zu verneinen ist, so dass das Verfahren zu Schritt S140 zurückkehrt, wo eine weitere Fahrroute geplant wird, zum Beispiel die in Fig.4 gezeigte zweite Fahrroute $F_2$. Allgemein können für die einzelnen Fahrrouten $F_1$-$F_3$ unterschiedliche Parameter variiert werden, beispielsweise eine Positionierung, eine Ausrichtung sowie eine Reihenfolge der Fahrspuren $S_1$-$S_4$ im Innenbereich 21. Während in Fig. 3-5 die Fahrspuren $S_1$-$S_4$ jeweils parallel zur Fluchtkante $K_1$-$K_3$ verlaufen, könnte auch eine andere Ausrichtung gewählt werden. Auch die Positionierung könnte verändert werden, was beispielsweise zur Folge haben könnte, dass der Innenbereich 21 nicht vollständig abgedeckt wird, dafür aber weniger Fahrspuren $S_1$-$S_4$ benötigt werden. Schließlich kann die Reihenfolge variiert werden, wobei beispielsweise nach der ersten Fahrspur $S_1$ ein Wechsel in die vierte Fahrspur $S_4$ erfolgen könnte, danach ein Wechsel in die zweite

Fahrspur $S_2$, gefolgt von einem Wechsel in eine fünfte Fahrspur (ohne Bezugszeichen). Hierdurch würde sich der notwendige Kurvenradius für die Wendewege vergrößern, was für eine Erntemaschine 10 mit größerem Wenderadius vorteilhaft wäre. Auch bei der Auswahl der Positionierung, Ausrichtung und Reihenfolge kann wiederum eine auf mehreren Ebenen verschachtelte Optimierung durchgeführt werden. Zur Auffindung der optimalen Reihenfolge werden nicht sämtliche denkbaren Reihenfolgen getestet, sondern nur solche, die einer sukzessiven Vergrößerung des bearbeiteten Bereichs 31 zur Fluchtkante $K_1$-$K_3$ hin entsprechen. Weitere Variationsmöglichkeiten stellen die Einteilung des Bearbeitungsbereichs 20 in Teilbereiche 26-29 dar, der Routenverlauf im Vorgewende 22, die Zuordnung einzelner Teilbereiche 26-29 zu unterschiedlichen Fluchtkanten $K_1$-$K_3$ sowie die Größe und Position eines Durchquerungsbereichs 32.

Für jede Fahrroute $F_1$-$F_3$ wird geprüft, ob diese optimal hinsichtlich des Optimierungskriteriums ist, beispielsweise einen Optimierungswert wie die Gesamtfahrzeit, die Gesamtfahrstrecke oder dergleichen minimiert. Zur Berechnung des Optimierungswerts, der auch als Kostenwert bezeichnet werden kann, werden jeweils Beiträge einzelner Routenabschnitte der Fahrroute aufsummiert, was sowohl die Routenabschnitte im Vorgewende 22 als auch die Routenabschnitte im Innenbereich 21 einschließt.

Wenn in Schritt S150 entschieden wird, dass die optimale Fluchtrand-Fahrroute $F_{R,opt}$ gefunden wurde, ist die Optimierung auf der unteren Ebene beendet und es wird in Schritt S160 überprüft, ob der optimale Fluchtrand $R_{opt}$ (und mit diesem die optimale Fahrroute $F_{opt}$) gefunden wurde. Sofern dies nicht der Fall ist, kehrt das Verfahren zu Schritt S110 zurück, wo ein neuer Fluchtrand $R_1$, $R_2$ ausgewählt wird, beispielsweise der in Fig. 5 dargestellte zweite Fluchtrand $R_2$. Auch für diesen wird wiederum eine optimale Fluchtrand-Fahrroute $F_{R,opt}$ ermittelt. Wird in Schritt S160 entschieden, dass der optimale Fluchtrand $R_{opt}$ und mit ihm die optimale Fahrroute $F_{opt}$ gefunden wurde, ist die Optimierung beendet.

Das Computersystem 1 erzeugt nun in Schritt S170 Steuerdaten D für die Erntemaschine 10, die der optimalen Fahrroute $F_{opt}$ entsprechen. Sofern die Erntemaschine 10 durch einen Fahrer gesteuert wird, können die Steuerdaten D Anweisungen für den Fahrer entsprechen, anhand derer er die Erntemaschine 10 entlang der optimalen Fahrroute $F_{opt}$ steuern kann. Falls die Erntemaschine 10 autonom fährt, können die Steuerdaten D explizite Fahr- bzw. Lenkkommandos für die Systeme der Erntemaschine 10 beinhalten. In Schritt S180 werden die Steuerdaten D drahtlos an die Erntemaschine 10 gesendet, wie in Fig. 1 angedeutet.

Um das Computersystem 1 in die Lage zu versetzen, das dargestellte Verfahren durchzuführen, kann die nötige Software als Computerprogrammprodukt, zum Beispiel als mobiler oder integrierter Datenträger zur Verfügung gestellt werden, welcher Programmcodemittel bzw. einen Programmcode aufweist, der das Verfahren auf der Hardware des Computersystems implementiert.

Gemäß einer nicht dargestellten Alternative kann das Computersystem 1 auch in die Erntemaschine 10 integriert sein. In diesem Fall stehen die Steuerdaten D unmittelbar in der Erntemaschine 10 zur Verfügung.

## Patentansprüche

1. Verfahren zur Fahrroutenplanung für einen Erntevorgang, bei welchem ein vorgegebener Bearbeitungsbereich (20) von einer Erntemaschine (10) entsprechend einer Fahrroute ($F_1$-$F_3$) durchfahren wird, wobei

   - für eine Fahrroute ($F_1$-$F_3$) ein Fluchtrand ($R_1$, $R_2$) definiert wird (S110), mit wenigstens einer Fluchtkante ($K_1$-$K_3$) des Bearbeitungsbereichs (20), welche einem Zufluchtbereich (33) für Wild außerhalb des Bearbeitungsbereichs (20) zugewandt ist,
   - ein Innenbereich (21) des Bearbeitungsbereichs (20) definiert wird (S120) sowie ein Vorgewende (22), welches außenseitig des Innenbereichs (21) unter Aussparung des Fluchtrands ($R_1$, $R_2$) angeordnet ist,
   - die Fahrroute ($F_1$-$F_3$) automatisch derart ermittelt wird (S140), dass wenigstens in einem Teilbereich (26-29) des Bearbeitungsbereichs (20) eine Wildschutzbearbeitung erfolgt, indem zunächst das Vorgewende (22) bearbeitet wird und danach der Innenbereich (21) unter Nutzung des Vorgewendes (22) für Wendevorgänge, wobei die Bearbeitung des Innenbereichs (21) in einem von einer Fluchtkante ($K_1$-$K_3$) beabstandeten Anfangsbereich (30) begonnen und sukzessive zu dieser Fluchtkante ($K_1$-$K_3$) hin fortgesetzt wird, wodurch ein bearbeiteter Bereich (31) sukzessive vom Anfangsbereich zur Fluchtkante ($K_1$-$K_3$) hin ausgedehnt wird, und
   - automatisch Steuerdaten (D) zur Steuerung der Erntemaschine (10) während des Erntevorgangs erzeugt werden (S170), wobei die Steuerdaten (D) eine ermittelte Fahrroute ($F_1$-$F_3$) repräsentieren.

2. Verfahren nach Anspruch 1, **dadurch gekennzeichnet, dass** eine automatische Optimierung der Fahrroute ($F_1$-$F_3$) durchgeführt wird (S100), indem aus einer Mehrzahl möglicher Fahrrouten ($F_1$-$F_3$) eine entsprechend einem Optimierungskriterium optimale Fahrroute ($F_{opt}$) ermittelt wird (S130), und automatisch Steuerdaten (D) erzeugt werden, die die optimale Fahrroute ($F_{opt}$) repräsen-

tieren.

3. Verfahren nach einem der vorherigen Ansprüche, **dadurch gekennzeichnet, dass** für jeden einer Mehrzahl von Fluchträndern ($R_1$, $R_2$) automatisch aus einer Mehrzahl möglicher Fahrrouten ($F_1$-$F_3$) eine entsprechend dem Optimierungskriterium optimale Fluchtrand-Fahrroute ($F_{R,opt}$) ermittelt wird (S130), und automatisch aus den optimalen Fluchtrand-Fahrrouten ($F_{R,opt}$) entsprechend dem Optimierungskriterium die optimale Fahrroute ($F_{opt}$) ermittelt wird (S100).

4. Verfahren nach einem der vorherigen Ansprüche, **dadurch gekennzeichnet, dass** das Optimierungskriterium wenigstens teilweise auf einer Minimierung einer Fahrstrecke, einer Minimierung einer Fahrzeit, einer Minimierung eines Energieverbrauchs einer Minimierung einer unbearbeiteten Fläche, einer Minimierung mehrfach überfahrener Bereiche und/oder einer Minimierung einer Fluchtstrecke für das Wild basiert.

5. Verfahren nach einem der vorherigen Ansprüche, **dadurch gekennzeichnet, dass** wenigstens eine Fahrroute ($F_1$-$F_3$) eine Bearbeitung wenigstens eines Eckbereichs (23) im Vorgewende (22) vorsieht, bei welcher die Erntemaschine (10) wenigstens eine Fahrtrichtungsumkehr zwischen Vorwärts- und Rückwärtsfahrt durchführt.

6. Verfahren nach einem der vorherigen Ansprüche, **dadurch gekennzeichnet, dass** unterschiedlichen Teilbereichen (26-29) des Bearbeitungsbereichs (20) unterschiedliche Fluchtkanten ($K_1$-$K_3$) des Fluchtrands ($R_1$, $R_2$) zugeordnet werden.

7. Verfahren nach einem der vorherigen Ansprüche, **dadurch gekennzeichnet, dass** wenigstens eine Fahrroute ($F_1$-$F_3$) eine Wildschutzbearbeitung einer Mehrzahl von Teilbereichen (26-29) vorsieht, welchen unterschiedliche Fluchtkanten ($K_1$-$K_3$) zugeordnet sind, wobei das Vorgewende (22) aller Teilbereiche (26-29) bearbeitet wird, bevor der Innenbereich (21) unterschiedlicher Teilbereiche (26-29) bearbeitet wird, entsprechend der dem jeweiligen Teilbereich (26-29) zugeordneten Fluchtkante ($K_1$-$K_3$).

8. Verfahren nach einem der vorherigen Ansprüche, **dadurch gekennzeichnet, dass** wenigstens eine Fahrroute ($F_1$-$F_3$) eine Wildschutzbearbeitung einer Mehrzahl von Teilbereichen (26-29) vorsieht, wobei jeweils das Vorgewende (22) eines Teilbereichs (26-29) bearbeitet wird und danach der Innenbereich (21) dieses Teilbereichs (26-29), bevor ein nächster Teilbereich (26-29) bearbeitet wird.

9. Verfahren nach einem der vorherigen Ansprüche, **dadurch gekennzeichnet, dass** für eine Fahrroute ($F_1$-$F_3$) ein Fluchtrand ($R_1$, $R_2$) mit voneinander getrennten Fluchtkanten ($K_1$-$K_3$) definiert wird, eine Mehrzahl von zwischen den Fluchtkanten ($K_1$-$K_3$) angeordneten, getrennten Vorgewende-Abschnitten (23, 24) des Vorgewendes (22) definiert werden, und die Fahrroute ($F_1$-$F_3$) vor der Bearbeitung des Innenbereichs (21) in einem Durchquerungsbereich (32) ein Durchqueren des Innenbereichs (21) zum Wechseln zwischen zwei Vorgewende-Abschnitten (23, 24) vorsieht.

10. Verfahren nach einem der vorherigen Ansprüche, **dadurch gekennzeichnet, dass** beiderseits des Durchquerungsbereichs (32) Teilbereiche (26-29) mit unterschiedlichen Fluchtkanten ($K_1$-$K_3$) definiert werden.

11. Verfahren nach einem der vorherigen Ansprüche, **dadurch gekennzeichnet, dass** die Fahrroute ($F_1$-$F_3$) spezifisch für die ausführende Erntemaschine (10) unter Berücksichtigung von Geometrie und/oder Fahreigenschaften der Erntemaschine (10) ermittelt wird.

12. Verfahren nach einem der vorherigen Ansprüche, **dadurch gekennzeichnet, dass** für die Erntemaschine (10) die Fahrroute ($F_1$-$F_3$) extern ermittelt wird und die Steuerdaten (D) extern erzeugt (S170) und an die Erntemaschine übermittelt werden (S180).

13. Verfahren nach einem der vorherigen Ansprüche, **dadurch gekennzeichnet, dass** Steuerdaten (D) für eine autonom fahrende Erntemaschine (10) erzeugt werden, welche die Feldbearbeitung anhand der Steuerdaten (D) autonom durchführt.

14. Verfahren nach einem der vorherigen Ansprüche, **dadurch gekennzeichnet, dass** Steuerdaten (D) für eine durch einen Fahrer gelenkte Erntemaschine (10) erzeugt werden, so dass anhand der Steuerdaten (D) Steueranweisungen für den Fahrer erzeugt werden können.

15. Computersystem (1) zur Fahrroutenplanung für einen Erntevorgang, bei welchem ein vorgegebener Bearbeitungsbereich (20) von einer Erntemaschine (10) entsprechend einer Fahrroute ($F_1$-$F_3$) durchfahren wird, wobei, wenn

- für eine Fahrroute ($F_1$-$F_3$) ein Fluchtrand ($R_1$, $R_2$) definiert ist, mit wenigstens einer Fluchtkante ($K_1$-$K_3$) des Bearbeitungsbereichs (20), welche einem Zufluchtbereich (33) für Wild außerhalb des Bearbeitungsbereichs (20) zugewandt ist, und

- ein Innenbereich (21) des Bearbeitungsbereichs (20) definiert ist sowie ein Vorgewende (20), welches außenseitig des Innenbereichs (21) unter Aussparung des Fluchtrands ($R_1$, $R_2$) angeordnet ist,

das Computersystem (1) dazu eingerichtet ist:

- die Fahrroute ($F_1$-$F_3$) automatisch derart zu ermitteln (S140), dass wenigstens in einem Teilbereich (26-29) des Bearbeitungsbereichs (20) eine Wildschutzbearbeitung erfolgt, indem zunächst das Vorgewende (22) bearbeitet wird und danach der Innenbereich (21) unter Nutzung des Vorgewendes (22) für Wendevorgänge, wobei die Bearbeitung des Innenbereichs (21) in einem von einer Fluchtkante ($K_1$-$K_3$) beabstandeten Anfangsbereich (30) begonnen und sukzessive zu dieser Fluchtkante ($K_1$-$K_3$) hin fortgesetzt wird, wodurch ein bearbeiteter Bereich (31) sukzessive vom Anfangsbereich (30) zur Fluchtkante ($K_1$-$K_3$) hin ausgedehnt wird, und
- automatisch Steuerdaten (D) zur Steuerung der Erntemaschine (10) während des Erntevorgangs zu erzeugen (S170), wobei die Steuerdaten (D) eine ermittelte Fahrroute ($F_1$-$F_3$) repräsentieren.

**16.** Erntemaschine (10) mit einem Computersystem (1) zur Fahrroutenplanung für einen Erntevorgang, bei welchem ein vorgegebener Bearbeitungsbereich (20) von der Erntemaschine (10) entsprechend einer Fahrroute ($F_1$-$F_3$) durchfahren wird, wobei, wenn

- für eine Fahrroute ($F_1$-$F_3$) ein Fluchtrand ($R_1$, $R_2$) definiert ist, mit wenigstens einer Fluchtkante ($K_1$-$K_3$) des Bearbeitungsbereichs (20), welche einem Zufluchtbereich (33) für Wild außerhalb des Bearbeitungsbereichs (20) zugewandt ist, und
- ein Innenbereich (21) des Bearbeitungsbereichs (20) definiert ist sowie ein Vorgewende (22), welches außenseitig des Innenbereichs (21) unter Aussparung des Fluchtrands ($R_1$, $R_2$) angeordnet ist,

das Computersystem (1) dazu eingerichtet ist:

- die Fahrroute ($F_1$-$F_3$) automatisch derart zu ermitteln (S140), dass wenigstens in einem Teilbereich (26-29) des Bearbeitungsbereichs (20) eine Wildschutzbearbeitung erfolgt, indem zunächst das Vorgewende (22) bearbeitet wird und danach der Innenbereich (21) unter Nutzung des Vorgewendes (22) für Wendevorgänge, wobei die Bearbeitung des Innenbereichs (22) in einem von einer Fluchtkante ($K_1$-$K_3$) beabstandeten Anfangsbereich (30) begonnen und sukzessive zu dieser Fluchtkante ($K_1$-$K_3$) hin fortgesetzt wird, wodurch ein bearbeiteter Bereich (31) sukzessive vom Anfangsbereich (30) zur Fluchtkante ($K_1$-$K_3$) hin ausgedehnt wird, und
- automatisch Steuerdaten (D) zur Steuerung der Erntemaschine (10) während des Erntevorgangs zu erzeugen (S170), wobei die Steuerdaten (D) eine ermittelte Fahrroute ($F_1$-$F_3$) repräsentieren.

**17.** Computerprogrammprodukt mit Programmcodemitteln, welche ein Computersystem (1) befähigen, die in Anspruch 15 beschriebenen Schritte durchzuführen.

## Claims

**1.** Method for planning a driving route for harvesting, in which a predetermined processing area (20) is traversed by a harvesting machine (10) according to a driving route ($F_1$-$F_3$), wherein

- an escape border ($R_1$, $R_2$) is defined (S110) for a driving route ($F_1$-$F_3$), with at least one escape edge ($K_1$-$K_3$) of the processing area (20) facing a refuge area (33) for wildlife outside the processing area (20),
- an inner area (21) of the processing area (20) is defined (S120) as well as a headland (22), which is arranged on the outside of the inner area (21), leaving out the escape border ($R_1$, $R_2$),
- the driving route ($F_1$-$F_3$) is automatically determined (S140) in such a way that at least in a sub-area (26-29) of the processing area (20) wildlife protection processing is carried out by first processing the headland (22) and then the inner area (21) using the headland (22) for turning maneuvers, wherein the processing of the inner area (21) begins in an initial area (30) spaced away from an escape edge ($K_1$-$K_3$) and is successively continued towards this escape edge ($K_1$-$K_3$), whereby a processed area (31) is successively extended from the initial area towards the escape edge ($K_1$-$K_3$), and
- control data (D) for controlling the harvesting machine (10) during harvesting is automatically generated (S170), wherein the control data (D) represents a determined driving route ($F_1$-$F_3$).

**2.** Method according to claim 1, **characterized in that** an automatic optimization of the driving route ($F_1$-$F_3$) is carried out (S100) by determining (S130) an optimal driving route ($F_{opt}$) from a plurality of possible driving routes ($F_1$-$F_3$) according to an optimization criterion, and automatically generating control data (D) which represent the optimal driving route ($F_{opt}$).

3. Method according to one of the preceding claims, **characterized in that** for each of a plurality of escape borders ($R_1$, $R_2$), an optimal escape border driving route ($F_{R,opt}$) is automatically determined (S130) from a plurality of possible driving routes ($F_1$-$F_3$) according to the optimization criterion, and the optimal driving route ($F_{opt}$) is automatically determined (S100) from the optimal escape border driving route ($F_{R,opt}$) according to the optimization criterion.

4. Method according to one of the preceding claims, **characterized in that** the optimization criterion is based at least partially on a minimization of a travel distance, a minimization of a travel time, a minimization of an energy consumption, a minimization of an unprocessed area, a minimization of areas passed over several times and/or a minimization of an escape distance for wildlife.

5. Method according to one of the preceding claims, **characterized in that** at least one driving route ($F_1$-$F_3$) provides a processing of at least one corner area (23) in the headland (22), in which the harvesting machine (10) performs at least one reversal of direction of travel between forward and reverse travel.

6. Method according to one of the preceding claims, **characterized in that** different escape edges ($K_1$-$K_3$) of the escape border ($R_1$, $R_2$) are assigned to different sub-areas (26-29) of the processing area (20).

7. Method according to one of the preceding claims, **characterized in that** at least one driving route ($F_1$-$F_3$) provides for wildlife protection processing of a plurality of sub-areas (26-29) to which different escape edges ($K_1$-$K_3$) are assigned, wherein the headland (22) of all sub-areas (26-29) is processed before the inner area (21) of different sub-areas (26-29) is processed, according to the escape edge ($K_1$-$K_3$) assigned to the respective sub-area (26-29).

8. Method according to one of the preceding claims, **characterized in that** at least one driving route ($F_1$-$F_3$) provides for wildlife protection processing of a plurality of sub-areas (26-29), wherein the respective headland (22) of a sub-area (26-29) is processed and then the inner area (21) of this sub-area (26-29) is processed before a next sub-area (26-29) is processed.

9. Method according to one of the preceding claims, **characterized in that** an escape border ($R_1$, $R_2$) with separate escape edges ($K_1$-$K_3$) is defined for a

driving route ($F_1$-$F_3$), a plurality of separate headland sections (23, 24) arranged between the escape edges ($K_1$-$K_3$) of the headland (22) are defined, and the driving route ($F_1$-$F_3$) provides for crossing the inner area (21) in a crossing area (32) before processing the inner area (21) to switch between two headland sections (23, 24).

10. Method according to one of the preceding claims, **characterized in that** sub-areas (26-29) with different escape edges ($K_1$-$K_3$) are defined on both sides of the crossing area (32).

11. Method according to one of the preceding claims, **characterized in that** the driving route ($F_1$-$F_3$) is determined specifically for the harvesting machine (10) carrying out the operation, taking into account the geometry and/or driving characteristics of the harvesting machine (10).

12. Method according to one of the preceding claims, **characterized in that** the driving route ($F_1$-$F_3$) for the harvesting machine (10) is determined externally and the control data (D) is generated (S170) externally and transmitted to the harvesting machine (S180).

13. Method according to one of the preceding claims, **characterized in that** control data (D) is generated for an autonomously driving harvesting machine (10), which autonomously carries out the field processing on the basis of the control data (D).

14. Method according to one of the preceding claims, **characterized in that** control data (D) is generated for a harvesting machine (10) steered by a driver, so that control instructions for the driver can be generated on the basis of the control data (D).

15. Computer system (1) for planning a driving route for harvesting, in which a predetermined processing area (20) is traversed by a harvesting machine (10) according to a driving route ($F_1$-$F_3$), wherein, if

- an escape border ($R_1$, $R_2$) is defined for a driving route ($F_1$-$F_3$), with at least one escape edge ($K_1$-$K_3$) of the processing area (20) facing a refuge area (33) for wildlife outside the processing area (20), and
- an inner area (21) of the processing area (20) is defined as well as a headland (20), which is arranged on the outside of the inner area (21), leaving out the escape border ($R_1$, $R_2$),

the computer system (1) is configured to:

- automatically determine (S140) the driving route ($F_1$-$F_3$) in such a way that at least in a sub-area (26-29) of the processing area (20) wildlife protection processing is carried out by first processing the headland (22) and then the inner area (21) using the headland (22) for turning maneuvers, wherein the processing of the inner area (21) begins in an initial area (30) spaced away from an escape edge ($K_1$-$K_3$) and is successively continued towards this escape edge ($K_1$-$K_3$), whereby a processed area (31) is successively extended from the initial area (30) towards the escape edge ($K_1$-$K_3$), and
- automatically generate (S170) control data (D) for controlling the harvesting machine (10) during harvesting, wherein the control data (D) represents a determined driving route ($F_1$-$F_3$).

16. Harvesting machine (10) with a computer system (1) for planning a driving route for harvesting, in which a predetermined processing area (20) is traversed by the harvesting machine (10) according to a driving route ($F_1$-$F_3$), wherein, if

- an escape border ($R_1$, $R_2$) is defined for a driving route ($F_1$-$F_3$), with at least one escape edge ($K_1$-$K_3$) of the processing area (20) facing a refuge area (33) for wildlife outside the processing area (20), and
- an inner area (21) of the processing area (20) is defined as well as a headland (22), which is arranged on the outside of the inner area (21), leaving out the escape border ($R_1$, $R_2$),

the computer system (1) is configured to:

- automatically determine (S140) the driving route ($F_1$-$F_3$) in such a way that at least in a sub-area (26-29) of the processing area (20) wildlife protection processing is carried out by first processing the headland (22) and then the inner area (21) using the headland (22) for turning maneuvers, wherein the processing of the inner area (22) begins in an initial area (30) spaced away from an escape edge ($K_1$-$K_3$) and is successively continued towards this escape edge ($K_1$-$K_3$), whereby a processed area (31) is successively extended from the initial area (30) towards the escape edge ($K_1$-$K_3$), and
- automatically generate (S170) control data (D) for controlling the harvesting machine (10) during harvesting, wherein the control data (D) represents a determined driving route ($F_1$-$F_3$).

17. Computer program product with program code means which enable a computer system (1) to perform the steps described in claim 15.

**Revendications**

1. Procédé de planification d'itinéraire de déplacement pour une opération de récolte, au cours de laquelle une zone de travail (20) prédéfinie est parcourue par une machine de récolte (10) conformément à un itinéraire de déplacement ($F_1$-$F_3$), dans lequel

- pour un itinéraire de déplacement ($F_1$-$F_3$), une bordure de fuite ($R_1$, $R_2$) est définie (S110), comprenant au moins une arête de fuite ($K_1$-$K_3$) de la zone de travail (20), qui est tournée vers une zone de refuge (33) pour le gibier située en dehors de la zone de travail (20),
- une zone intérieure (21) de la zone de travail (20) est définie (S120), ainsi qu'une fourrière (22) qui est disposée à l'extérieur de la zone intérieure (21) en laissant libre la bordure de fuite ($R_1$, $R_2$),
- l'itinéraire de déplacement ($F_1$-$F_3$) est déterminé automatiquement (S140) de telle sorte qu'une opération de protection du gibier soit effectuée dans au moins une zone partielle (26-29) de la zone de travail (20) en traitant d'abord la fourrière (22), puis la zone intérieure (21) en utilisant la fourrière (22) pour les manœuvres de demi-tour, le traitement de la zone intérieure (21) commençant dans une zone initiale (30) espacée d'une arête de fuite ($K_1$-$K_3$) et se poursuivant successivement vers cette arête de fuite ($K_1$-$K_3$), ce par quoi une zone traitée (31) s'étend successivement de la zone initiale vers l'arête de fuite ($K_1$-$K_3$), et
- les données de commande (D) sont générées automatiquement pour commander la machine de récolte (10) pendant l'opération de récolte (S170), les données de commande (D) représentant un itinéraire déterminé de déplacement ($F_1$-$F_3$) déterminé.

2. Procédé selon la revendication 1, **caractérisé en ce qu'**une optimisation automatique de l'itinéraire de déplacement ($F_1$-$F_3$) est effectuée (S100) en déterminant (S130), parmi une pluralité d'itinéraires de déplacement possibles ($F_1$-$F_3$), un itinéraire de déplacement optimal ($F_{opt}$) conformément à un critère d'optimisation, et **en ce que** des données de commande (D) représentant l'itinéraire de déplacement optimal ($F_{opt}$) sont générées automatiquement.

3. Procédé selon l'une des revendications précédentes, **caractérisé en ce que**, pour chacune d'une pluralité de bordures de fuite ($R_1$, $R_2$), un itinéraire de déplacement de bordure de fuite optimal ($F_{R,opt}$) est déterminé automatiquement (S130) parmi une pluralité d'itinéraires de déplacement possibles ($F_1$-$F_3$) conformément au critère d'optimisation, et **en ce que** l'itinéraire de déplacement optimal ($F_{opt}$) est déterminé automatiquement (S100) parmi les itinéraires de déplacement de bordure de fuite optimaux ($F_{R,opt}$) conformément au critère d'optimisation.

4. Procédé selon l'une des revendications précédentes, **caractérisé en ce que** le critère d'optimisation repose au moins en partie sur une minimisation d'une distance de déplacement, une minimisation d'un temps de trajet, une minimisation d'une consommation d'énergie, une minimisation d'une surface non traitée, une minimisation de zones parcourues plusieurs fois et/ou une minimisation d'une distance de fuite pour le gibier.

5. Procédé selon l'une des revendications précédentes, **caractérisé en ce qu'**au moins un itinéraire de déplacement ($F_1$-$F_3$) prévoit un traitement d'au moins une zone d'angle (23) dans la fourrière (22), lors duquel la machine de récolte (10) effectue au moins une inversion de sens de marche entre la marche avant et la marche arrière.

6. Procédé selon l'une des revendications précédentes, **caractérisé en ce que** différentes zones partielles (26-29) de la zone de travail (20) sont associées à différentes arêtes de fuite ($K_1$-$K_3$) de la bordure de fuite ($R_1$, $R_2$).

7. Procédé selon l'une des revendications précédentes, **caractérisée en ce qu'**au moins un itinéraire de déplacement ($F_1$-$F_3$) prévoit un traitement de protection du gibier d'une pluralité de zones partielles (26-29) auxquelles sont respectivement associées différentes arêtes de fuite ($K_1$-$K_3$), la fourrière (22) de toutes les zones partielles (26-29) étant traitée avant que la zone intérieure (21) des différentes zones partielles (26-29) ne soit traitée conformément à l'arête de fuite ($K_1$-$K_3$) associée à la zone partielle (26-29) respective.

8. Procédé selon l'une des revendications précédentes, **caractérisé en ce qu'**au moins un itinéraire de déplacement ($F_1$-$F_3$) prévoit un traitement de protection du gibier d'une pluralité de zones partielles (26-29), dans lequel la fourrière (22) d'une zone partielle (26-29) est traitée, puis la zone intérieure (21) de cette zone partielle (26-29), avant qu'une zone partielle (26-29) suivante ne soit traitée.

9. Procédé selon l'une des revendications précédentes, **caractérisé en ce que**, pour un itinéraire de déplacement ($F_1$-$F_3$), une bordure de fuite ($R_1$, $R_2$) est définie avec des arêtes de fuite ($K_1$-$K_3$) séparées les unes des autres, **en ce qu'**une pluralité de tronçons de fourrière séparés (23, 24) de la fourrière (22) et disposés entre les arêtes de fuite ($K_1$-$K_3$) sont

définis, et **en ce que** l'itinéraire de déplacement ($F_1$-$F_3$) prévoit, avant le traitement de la zone intérieure (21), une traversée de la zone intérieure (21) dans une zone de traversée (32) pour alterner entre deux tronçons de fourrière (23, 24).

10. Procédé selon l'une des revendications précédentes, **caractérisé en ce que** des zones partielles (26-29) avec différentes arêtes de fuite ($K_1$-$K_3$) sont définies de part et d'autre de la zone de traversée (32).

11. Procédé selon l'une des revendications précédentes, **caractérisé en ce que** l'itinéraire de déplacement ($F_1$-$F_3$) est déterminé spécifiquement pour la machine de récolte (10) exécutante, en tenant compte de la géométrie et/ou des caractéristiques de déplacement de la machine de récolte (10).

12. Procédé selon l'une des revendications précédentes, **caractérisé en ce que**, pour la machine de récolte (10), l'itinéraire de déplacement ($F_1$-$F_3$) est déterminé de manière externe et **en ce que** les données de commande (D) sont générées de manière externe (S170) et transmises à la machine de récolte (S180).

13. Procédé selon l'une des revendications précédentes, **caractérisé en ce que** des données de commande (D) sont générées pour une machine de récolte (10) à conduite autonome, laquelle effectue le traitement du champ de manière autonome à l'aide des données de commande (D).

14. Procédé selon l'une des revendications précédentes, **caractérisé en ce que** les données de commande (D) sont générées pour une machine de récolte (10) dirigée par un conducteur, de sorte que des instructions de commande destinées au conducteur puissent être générées à l'aide des données de commande (D).

15. Système informatique (1) destiné à la planification d'itinéraire de déplacement pour une opération de récolte, au cours de laquelle une zone de travail (20) prédéfinie est parcourue par une machine de récolte (10) conformément à un itinéraire de déplacement ($F_1$-$F_3$), dans lequel, si

- pour un itinéraire de déplacement ($F_1$-$F_3$), une bordure de fuite ($R_1$, $R_2$) est définie avec au moins une arête de fuite ($K_1$-$K_3$) de la zone de travail (20) qui est tournée vers une zone de refuge (33) pour le gibier située en dehors de la zone de travail (20), et si
- une zone intérieure (21) de la zone de travail (20) est définie, ainsi qu'une fourrière (20) qui est disposée à l'extérieur de la zone intérieure (21) en laissant libre la bordure de fuite ($R_1$, $R_2$),

le système informatique (1) est conçu pour :

- déterminer automatiquement (S140) l'itinéraire de déplacement ($F_1$-$F_3$) de telle sorte qu'une opération de protection du gibier soit effectuée dans au moins une zone partielle (26-29) de la zone de travail (20) en traitant d'abord la fourrière (22), puis la zone intérieure (21) en utilisant la fourrière (22) pour les manœuvres de demi-tour, le traitement de la zone intérieure (21) commençant dans une zone initiale (30) espacée d'une arête de fuite ($K_1$-$K_3$) et se poursuivant successivement vers cette arête de fuite ($K_1$-$K_3$), ce par quoi une zone traitée (31) s'étend successivement de la zone initiale (30) vers l'arête de fuite ($K_1$-$K_3$), et
- générer automatiquement des données de commande (D) pour commander la machine de récolte (10) pendant l'opération de récolte (S170), les données de commande (D) représentant un itinéraire de déplacement ($F_1$-$F_3$) déterminé.

16. Machine de récolte (10) comprenant un système informatique (1) destinée à la planification d'itinéraire de déplacement pour une opération de récolte, au cours de laquelle une zone de travail (20) prédéfinie est parcourue par la machine de récolte (10) conformément à un itinéraire de déplacement ($F_1$-$F_3$), dans lequel, si

- pour un itinéraire de déplacement ($F_1$-$F_3$), une bordure de fuite ($R_1$, $R_2$) est définie avec au moins une arête de fuite ($K_1$-$K_3$) de la zone de travail (20) qui est tournée vers une zone de refuge (33) pour le gibier située en dehors de la zone de travail (20), et si
- une zone intérieure (21) de la zone de travail (20) est définie, ainsi qu'une fourrière (22) qui est disposée à l'extérieur de la zone intérieure (21) en laissant libre la bordure de fuite ($R_1$, $R_2$),

le système informatique (1) est conçu pour :

- déterminer automatiquement (S140) l'itinéraire de déplacement ($F_1$-$F_3$) de telle sorte qu'une opération de protection du gibier soit effectuée dans au moins une zone partielle (26-29) de la zone de travail (20) en traitant d'abord la fourrière (22), puis la zone intérieure (21) en utilisant la fourrière (22) pour les manœuvres de demi-tour, le traitement de la zone intérieure (22) commençant dans une zone initiale (30) espacée d'une arête de fuite ($K_1$-$K_3$) et se poursuivant successivement vers cette arête de fuite ($K_1$-$K_3$), ce par quoi une zone traitée (31) s'étend successivement de la zone initiale (30) vers l'arête de fuite ($K_1$-$K_3$), et
- générer automatiquement des données de commande (D) pour commander la machine de récolte (10) pendant l'opération de récolte (S170), les données de commande (D) représentant un itinéraire de déplacement ($F_1$-$F_3$) déterminé.

17. Produit de programme informatique comprenant des moyens à code de programme qui permettent à un système informatique (1) d'exécuter les étapes décrites dans la revendication 15.

Fig.1

Fig.2

Fig.3

Fig.4

Fig.5

# Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2021302962 A1
- CN 114518746 A
- DE 102008020616 A1
- EP 3414982 A1